# EUROPEAN PATENT APPLICATION

(11) **EP 2 299 345 A1**
(43) Date of publication of application: **23.03.2011**
(21) Application number: 09762380.5
(22) Date of filing: 01.06.2009
(51) Int. Cl.: G05B 23/02

(54) **PLANT MONITORING CONTROL DEVICE AND EVENT ANALYSIS SUPPORT METHOD**

(30) Priority: 12.06.2008 JP 2008153681
(71) Applicant: Hitachi Ltd., Chiyoda-ku Tokyo 100-8280 (JP)
(72) Inventor: SUZUKI Hiroshi, Hitachi-shi Ibaraki 319-1293 (JP); AKATSU Toru, Hitachi-shi Ibaraki 319-1293 (JP); MARUYAMA Yoshio, Hitachi-shi Ibaraki 319-1293 (JP)
(74) Representative: Beetz & Partner
(86) International application number: PCT/JP2009/059969
(87) International publication number: WO 2009/150950

(57) **Abstract**

A plant monitoring control device (200) provides an operation console (201), a control device (207) and a data processing device (203) that acquires process data, alarm log data, auxiliary device operation log data and an operation command from an operation staff to store in storage devices (221A, 221B, 221C, 221D) on a time series basis. An event analysis console unit (201b) has an event analysis support program to select an event specified by an operator, acquire key time information, search data related with the selected and specified event as event associated data on the basis of event data related information, and combine the data in a predetermined time range among the pieces of the searched time series event associated data with that in the operation console on the basis of the key time information to then be displayed on the operation console.

## Description

### TECHNICAL FIELD

The present invention relates to a plant monitoring control device, and in particularly to a plant monitoring control device and an event analysis support method of effectively analyzing events, when occurring abnormalities etc., by acquiring process data, alarm log data, auxiliary device operation log data from plant devices, and an operation command from an operation console operated by an operation staff.

### BACKGROUND ART

The plant monitoring control device, which controls and monitors the plant devices from the operation console operated manually by the operation staff, generally provides a function of recording the process data, the alarm log data, the auxiliary device operation log data from the plant devices and the operation commands on time series basis, and displaying them on a display device.

Incidentally, JP-A-2001-084034 has disclosed a technique such that three types of display, including a trend display at an occurrence time of recording an event, a display classified as an occurrence type and a display classified as an occurrence source, are displayed simultaneously to thereby be able to further make narrow down on a display screen. It also discloses a technique such that a variation of both an operation requirement amount and an operation amount are displayed simultaneously to estimate an operation condition and a countermeasure of the plant from variation aspects. In this way, problematical points are extracted effectively from the event record and the countermeasure to be checked up can be acquired.

### PRIOR ART DOCUMENT

### PATENT DOCUMENT

Patent Document 1: JP-A-2001-084034

### DISCLOSURE OF THE INVENTION

### PROBLEM TO BE SOLVED BY THE INVENTION

However, for a purpose of analyzing eventually the event, such as a trouble, an abnormal operation, etc., of the plant, it is required to have a work for specifying a cause by searching the types of process data and the operation command (operation log) associated with the event, the alarm log data and the auxiliary device operation log data around a time at which the event occurred, on the basis of the recorded alarm log data and auxiliary device operation log data.
Actually, the operation staff who monitors the plant is not always an engineer who is knowledgeable for a control logic, an alarm logic and an auxiliary device operation logic of the plant devices. Therefore, it is required to have another engineer having a deep professional expertise for the types of process data and alarm log to be related seemingly to the event, an entire control system of the plant to select the type of auxiliary device operation log, the alarm logic, the auxiliary device operation logic, etc. and having an experience considered of the cause in the event for the past trouble and the abnormal operation, for a purpose of chasing up the cause of event.

Further, even when searching data related to the event of an analysis target from the process data, alarm log data, auxiliary device operation log data and operation log data, the data is defined by a different variable name even though the data is the same, if monitoring control software is different for each of the plants. Therefore, it is also required to have a technical ability for a specification of the monitoring control software for searching the data.

Consequently, an object of the invention is to provide a plant monitoring control device and an event analysis support method of the same capable of displaying and easily analyzing events, such as a trouble, an abnormal operation, etc.

### MEANS FOR SOLVING THE PROBLEM

In order to achieve the above-mentioned object, the invention in the application has an aspect such that a plant monitoring control device comprising: an operation console that indicates process data, alarm log data and auxiliary device operation log data from plant devices to an operation staff to accept an operation command of the operation staff; a control device that acquires the process data, the alarm log data, the auxiliary device operation log data and the operation command of the operation staff from the plant devices to control the plant devices; and a data processing device that acquires the process data, the alarm log data, the auxiliary operation log data and the operation command of the operation staff to store in a storage device on a time series basis, the plant monitoring control device further comprising: event data related information that is registered by relating pieces of specific data among the process data, the alarm log data, the auxiliary device operation log data and the operation command of the operation staff with every predetermined event in advance; analysis event selection means that is made a specific event selectable by an operator in accordance with one piece of data selected, by the operator, from among the acquired process data, the alarm log data and auxiliary device operation log data; key time information acquiring means that acquires key time information related to an occurrence of the specific event selected from the one piece of data selected by the operator; and event associated data search means that searches the process data, the alarm log data, the auxiliary device operation log data and the operation command of an operation, as event associated data, related to the specific event selected in accordance with the event data related information, wherein the event associated data in a predetermined time range among the searched event associated data of the time series basis is combined to the operation console in accordance with the acquired key time information to display afterward.

According to the invention, when the operator selects the specific event on the basis of one piece of data selected, by the operator, from among the acquired process data, alarm log data and auxiliary device operation log data, specific data associated with the selected specific event is searched from among the process data, alarm log data, auxiliary device operation log data and the operation command of operation staff by the event associated data search means on the basis of the event data related information. Further, the specific data in a predetermined time range is combined to the operation console on the basis of the key time information to then display afterward.

In this way, the event associated data can easily be searched to be displayed on the basis of the key time information. Therefore, the event associated data for the event selected by the operator is rapidly displayed by an engineer even who does not have a detailed and specialist knowledge of the entire control system of the plant, alarm logic, auxiliary device operation logic, etc, and an enough experience for a consideration of cause of the event on the past trouble and abnormal operation, so that the cause of event to be analyzed can easily be seen.
In addition, the invention includes an event analysis support method in the plant monitoring control device.

### ADVANTAGES OF THE INVENTION

According to the invention, the plant monitoring control device and the event analysis support method of the same capable of displaying and easily analyzing events, such as a trouble, an abnormal operation, etc., can be provided.
Other objects, aspects and advantages of the invention will be made apparent from embodiments of the invention disclosed with reference to the accompanying drawings.

### BRIEF DESCRIPTION OF THE DRAWINGS

[Fig. 1] Amain systematic diagram of a thermal power generation;
[Fig. 2] A configuration diagram of a plant monitoring control device related to the invention;
[Fig. 3] A diagram showing an example of contents to be displayed on a display device of a monitoring control console unit;
[Fig. 4A] A diagram showing an example of data displayed on a screen of the monitoring control console unit and an example of an operation window for performing setting changes for a targeted value of a water level control in a tank and for a rotation speed of pumps;
[Fig. 4B] A diagram showing an example of data displayed on the screen of the monitoring control console unit and an example of a systematic diagram window for displaying a systematic diagram;
[Fig. 4C] A diagram showing an example of data displayed on the screen of the monitoring control console unit and an example of an alarm window for displaying an alarm log;
[Fig. 4D] A diagram showing an example of data displayed on the screen of the monitoring control console unit and an example of a trend monitor window for trend displaying process data;
[Fig. 4E] A diagram showing an example displaying a printed image of data formats to be stored in a storage device of a data processing device and a data recording format of an operation log;
[Fig. 4F] A diagram showing an example displaying a printed image of data formats to be stored in a storage device of a data processing device and a data recording format of an auxiliary device operation log;
[Fig. 4G] A diagram showing an example displaying a printed image of data formats to be stored in a storage device of a data processing device and a data format of an alarm log;
[Fig. 4H] A diagram showing an example displaying a printed image of data formats to be stored in a storage device of a data processing device and a recording format of historical data storing a trend of the process data in time-oriented;
[Fig. 5] A diagram showing an example of a table form;
[Fig. 6] A diagram showing an example of a table form;
[Fig. 7] A diagram showing an example of a table form;
[Fig. 8] A flowchart showing a control flow of a screen display etc. for supporting an event analysis in an event analysis console unit;
[Fig. 9] A flowchart showing a control flow of a screen display etc, for supporting an event analysis in an event analysis console unit;
[Fig. 10] A diagram for explaining an event analysis main menu screen;
[Fig. 11] A diagram for explaining an alarm log/auxiliary device operation log search screen when a search of the event associated data is performed from the alarm log or auxiliary device operation log;
[Fig. 12] A diagram for explaining a trend data search screen when the search of the event associated data is performed from trend data;
[Fig. 13] A screen example for explaining the search operation of the event associated data in the specified alarm log;
[Fig. 14] A screen example for explaining the search operation of the event associated data in the specified trend data;
[Fig. 15] A diagram for explaining an event analysis support screen;
[Fig. 16A] A diagram showing a display example of a logic diagram;
[Fig. 16B] A diagram showing a display example of a logic diagram; and
[Fig. 17] A diagram for explaining an additional data selection screen.

### MODE FOR CARRYING OUT THE INVENTION

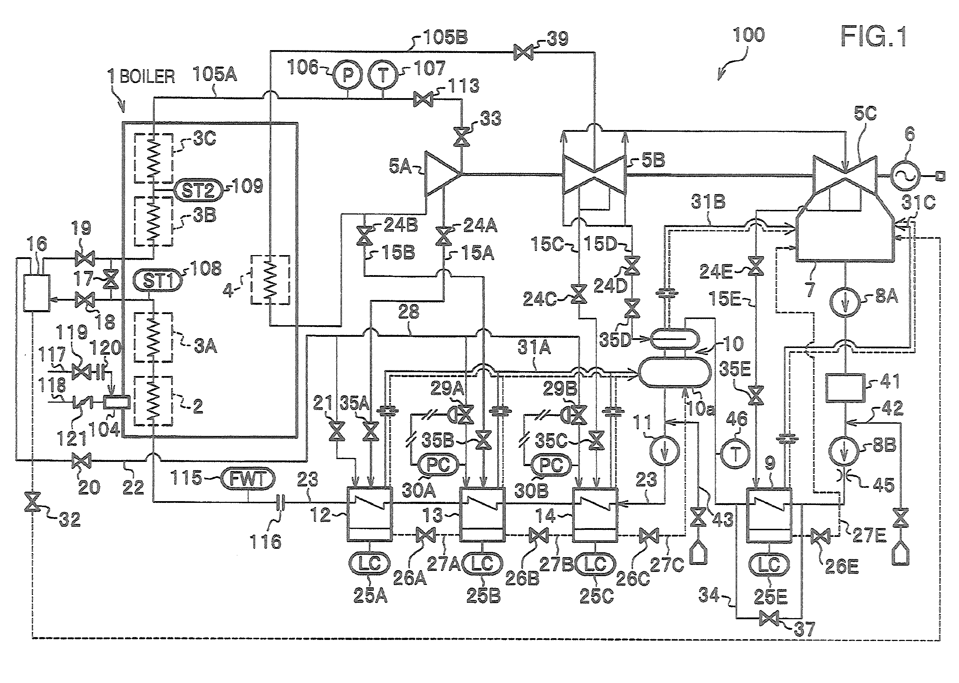

Next, a configuration of a thermal power plant, in which a plant monitoring control device as a preferred embodiment of the invention is applied to the thermal power plant, will be described with reference to Fig. 1.
Fig. 1 is a main systematic diagram of the thermal power plant.

### ((Example of Thermal Power Plant))

Here, in the thermal power plant, as an example, providing a flash tank in a boiler starting system, a description will be concerned with a thermal power plant 100 in which a generated steam in the flash tank is supplied to a high-pressure heater to perform a heat recovery when starting the thermal power plant.
A flash tank 16 is provided in a boiler 1 having an evaporator 2, a first-order superheater 3A, a second-order superheater 3B, a third-order superheater 3C, and a reheater 4.
The boiler 1 provides a burner 104 for injecting a fuel and air into the boiler 1, and the burner 104 is connected with a fuel supply line 117 and an air supply line 118. The fuel supply line 117 provides a fuel amount adjustable valve 119 and a fuel flowmeter 120, and the air supply line 118 provides an air amount adjustable valve 121.
The boiler 1 also provides a temperature gauge 108 (denoted as ST1:108 in Fig. 1) for measuring an outlet steam temperature ST1 of the first-order superheater 3 A and a temperature gauge 109 (denoted as ST2: 109 in Fig. 1) for measuring an outlet steam temperature ST2 of the second-order superheater 3B.

On a normal operation, the steam generated from the evaporator 2 in the boiler 1 passes through in the order of the first-order superheater 3 A, second-order superheater 3B and third-order supreheater 3C to generate a superheat steam. The superheat steam come from the outlet of third-order superheater 3C is supplied first to a high-pressure turbine 5A through a steam supply line 105A to drive the high-pressure turbine 5A. The superheat steam is reheated by the reheater 4 to then be supplied to a medium-pressure turbine 5B through a steam supply line 105B, drive the medium-pressure turbine 5B, further drive a low-pressure turbine 5C, and be dumped to a condenser 7. The high-pressure turbine 5A, medium-pressure turbine 5B and low-pressure turbine 5C are coupled on a single shaft to drive a power generator 6 and generate an electric power. The steam dumped to the condenser 7 is cooled down with a seawater circulated by a not shown seawater pump to then be returned to a water and sent to a low-pressure heater 9 (or, referred to as low-pressure water supply heater) via a condensate pump 8A, a condensate demineralizer 41, a pressure-rising condensate pump 8B, and a condensate flowmeter 45.

The condensed water heated up by the low-pressure heater 9 passes through a deaerator 10 to be raised in pressure by a water supply pump 11, heated up by three-stage high-pressure heaters 14, 13 and 12 (or, referred to as high-pressure water supply heater) in this order in Fig. 1 and returned to the evaporator 2 in the boiler 1 through a water supply line 23.
The steam supply line 105A provides a pressure gauge 106 for measuring a main steam pressure P, a temperature gauge 107 for measuring a main steam temperature T, and a turbine adjustable valve 113 for adjusting a steam supply amount to the high-pressure turbine 5A. The water supply line 23 provides a supplied water temperature gauge 115 for measuring a supplied water temperature FWT and a supplied water flowmeter 116 for measuring a supplied water amount.

In fact, a turbine stop valve 33 and a reheat steam stop valve 39 are provided respectively on the downstream side of turbine adjustable valve 113 on the steam supply line 105A to the high-pressure turbine 5A and on the steam supply line 105B from the reheater 4 to the medium-pressure turbine 5B, for a purpose of preventing an over-speed of the turbine on an abnormality, such as a turbine load loss.

The steam extracted by a turbine extracted steam pipe 15E from the low-pressure turbine 5C is introduced into a body portion of the low-pressure heater 9, as a heat source, to heat up the condensed water in a number of heat-up pipes in the low-pressure heater 9, thereafter, be turned into a flocculated water (drain water), and returned to the condenser 7 through a drain pipe 27E. The turbine extracted steam pipe 15E provides a turbine extracted steam valve 24E for controlling an extracted steam amount and an extracted steam check valve 35E for preventing a back flow from the low-pressure heater 9. Further, the body side of low-pressure heater 9 provides a low-pressure heater water level adjuster 25E (indicated by LC25E in Fig. 1) for adjusting a level of the drain water in the body side of low-pressure heater 9, including a water level sensor for detecting a drain water level, to adjust an open degree of a low-pressure heater water level adjustable valve 26E disposed on the drain pipe 27E and control the water level. Further, a vent pipe 31C is installed between from a gaseous phase portion of the body side of low-pressure heater 9 to the condenser 7 with an orifice intervened, for a purpose of extracting a non-condensable gas.
In addition, a condensed water inlet side and an outlet side of the low-pressure heater 9 are connected by a bypass pipe 34 having a low-pressure heater bypass valve 37.

The turbine extracted steam is supplied to the high-pressure heaters 12, 13, 14 and deaerator 10 from the high-pressure turbine 5A and medium-pressure turbine 5B via turbine extracted steam pipes 15A, 15B, 15C, 15Dand turbine extracted steam valves 24A, 24B, 24C, 24D so that the supplied water and condensed water are raised in temperature. The turbine extracted steam pipes 15A, 15B, 15C, 15D provide extracted steam check valves 35A, 35B, 35C, 35D to prevent the back flow from the high-pressure heaters 12, 13, 14 and the deaerator 10. Further, a vent pipe 31A is installed between the gaseous phase portion of the body portion side of high-pressure heaters 12, 13, 14 and the deaerator 10 with the orifice intervened, for a purpose of extracting the non-condensable gas. Further, a vent pipe 31B is installed between from the gaseous phase portion of the deaerator 10 to the condenser 7 with the orifice intervened, for a purpose of extracting the non-condensable gas.

The turbine extracted steam introduced into the body portion side of high-pressure heaters 12, 13, 14 is condensed and turned into the drain water by performing a heat exchange with the supplied water run through a number of heated pipes. This drain water is controlled in water level by high-pressure heater water level adjusters 25A, 25B, 25C each including a water level sensor (indicated by LC25A, LC25B, LC25C in Fig. 1) and by high-pressure heater water level adjustable valves 26A, 26B, 26C to be passed through drain pipes 27A, 27B, 27C, discharged in this order, and recovered in the deaerator 10.

Generally, in the thermal power plant, a corrosion in the system is made minimized by adjusting and processing the condensed water, supplied water, water in the boiler and water quality of the steam, and by preventing the boiler water pipe, steam pipe and turbine from adhering a scale. Here, a volatile substance process, in which a volatile chemical containing ammonia and hydrazine is injected into the condensed water and water supply system, is performed in the case where the boiler 1 is of a transflux type. In this process, a solubility of iron in ammonia is maintained in pH level 9.0 to 9.5 at which the solubility is most decreased, and deoxidation is performed by the deaerator 10 and hydrazine. In consequence, a corrosion prevention can be made by setting a reducing character environment in the system.

In these years, a composite-neutral water processing method, in which a small amount of ammonia and oxygen is injected into the condensed water and water supply system, has been employed. In this composite-neutral water processing method, the inside system is turned to a weak alkali (approximately pH 8.5) by ammonia, and oxygen of several hundreds ppb is injected into there. In consequence, the inside system is turned to a smaller solubility than a magnetite scale, and it is also turned to a hematite scale (Fe₂O₃) which is a fine particle and grows adhesively and smoothly, therefore, a damage etc. in a boiler heat transfer pipe, caused by a rise of differential pressure and the adhesion of scale in the plant system, is drastically reduced.

The condensate demineralizer 41 removes dissolution materials, such as a suspended solid matter like ion oxide, chlorine ion, etc. in the condensed water to purify the water in the system. The deaerator 10 makes the steam extracted from the medium-pressure turbine 5B contact to the condensed water as a heated steam. The oxygen etc. contained in the condensed water is thereby sent to the condenser 7 via the vent pipe 31Bto then be discharged to the outside. In contrast, the condensed water deaerated by the deaerator 10 is accumulated in a deaerator flush tank 10 to be supplied to the boiler 1 by the water supply pump 11 via the high-pressure heaters 14, 13, 12. A condensate demineralizer outlet oxygen injection line 42 is connected to the outlet side of the condensate demineralizer 41 to therefore inject ammonia and oxygen into the condensed water via the condensate demineralizer outlet oxygen injection line 42. Further, a deaerator outlet oxygen injection line 43 is connected to the outlet side of the deaerator flush tank 10ain the water supply system to again inject the oxygen into the supplied water during the water supply via the deaerator outlet oxygen injection line 43. That is, the injection of oxygen is again performed at the outlet of deaerator 10 since the oxygen injected into the condensate system is removed to the outside of system by the deaerator 10. The condensate system performs proportionally the injection to a condensed water flow rate from the condensate demineralizer outlet oxygen injection line 42. The water supply system controls an oxygen injected amount based on an oxygen concentration and a supplied water flow rate during the water supply at the inlet of boiler to adjust such that the oxygen concentration during the water supply reaches a predetermined value, and so as to attempt to prevent the corrosion for the condensed water and water supply system.

On the start of thermal power plant, the supplied water bypasses a superheater stop valve 17 from the outlet of first-order superheater 3A to be passed through a flush tank inlet valve 18, introduced into the flush tank 16, and made generate the steam. Since the steam generated in the flush tank 16 is recovered into a cycle as much as possible to attempt to make improve a thermal efficiency at the start of thermal power plant, the pressure in flush tank 16 is controlled by a superheater vent valve 19, a flush tank drain valve 32 and a flush tank steam heat recovery valve 20. The steam passes through a flush tank steam pipe 22 and a flush tank steam stop valve 21 to be introduced into the upper stage high-pressure heater 12. The introduced steam is then condensed by the heat exchange with the supplied water to be turned to the drain water.

By controlling the water level in the high-pressure heater 12 by the high-pressure heater water level adjuster 25A and high-pressure heater water level adjustable valve 26A of the subsequent stage, the drain water passes through the drain pipe 27A to be discharged in the order of the high-pressure heaters 13, 14 of the lower stage and lowermost stage and recovered by the deaerator 10.

A flush tank steam communicating pipe 28, branched from the flush tank steam pipe 22 to communicate with the high-pressure heater of other stage or the high-pressure heaters 13, 14 of the lower and lowermost stages, is provided on the part of flush tank steam pipe 22 connected from the flush tank 16 to the high-pressure heater 12 of an upper stage. The generated steam in a startup process of the thermal power plant 100 is also distributed, as heated steam, to the high-pressure heaters 13, 14 of the lower and lowermost stages by providing the flush tank steam communicating pipe 28 to thereby control the water level of the high-pressure heaters 13, 14 of the lower and lowermost stages.

To this end, pressure regulators 30A, 30B (indicated by PC30A, PC30B in Fig. 1) for regulating the pressure to the high-pressure heaters 13, 14 are provided on the part of flush tank steam communicating pipe 28. That is, the pressure regulators 30A, 30B provided on the flush tank steam communicating pipe 28 output a valve open degree command signal to be set to a specified pressure (this specified pressure is a pressure in the high-pressure heaters 13, 14 of the lower and lowermost stages in a condition where the turbine extracted steam is introduced into the high-pressure heaters 12, 13, 14 to be able to control a predetermined water level, after starting the turbine) to pressure regulating valves 29A, 29B provided on the flush tank steam communicating pipe 28 under a condition where the flush tank steam heat recovering valve 20 is open, when the steam generated in the flush tank is recovered to the upper stage high-pressure heater 12. An introduction amount of the steam (heated steam) generated in the flush tank is controlled to raise the pressure in the high-pressure heaters 13, 14 of the lower and lowermost stages up to the specified pressure which can control the predetermined water level from a negative pressure condition (low pressure condition).

The control method on a startup using the steam introduced from the flush tank 16 in the above-mentioned thermal power plant is disclosed in JP-A-10-317916, which is a known technique, here, a detailed description is omitted more than the above.

Further, a look-ahead control method of following the load requirement command in high speed is disclosed in JP-A-9-250702 as known, by controlling the outlet steam temperature ST1 at the first-order superheater 3A, the outlet steam temperature ST2 at the second-order superheater 3B, the main steam temperature T, the main steam pressure P, the supplied water temperature FWT, the open degree of the fuel amount adjustable valve 119 and air amount adjustable valve 121 in accordance with the supplied water flow rate etc., the rotation speed of water supply pump 11, the open degree of turbine adjustable valve 113, etc. on the basis of a deviation signal between a load requirement command and an output signal of the generator 6.

Further, the control method of ammonia and oxygen concentration in the condensed water and supplied water is a know technique disclosed in JP-A-9-126410, and a detailed description will be omitted,

### (Plant Monitoring Control Device)

Next, a plant monitoring control device related to the invention will be described below.

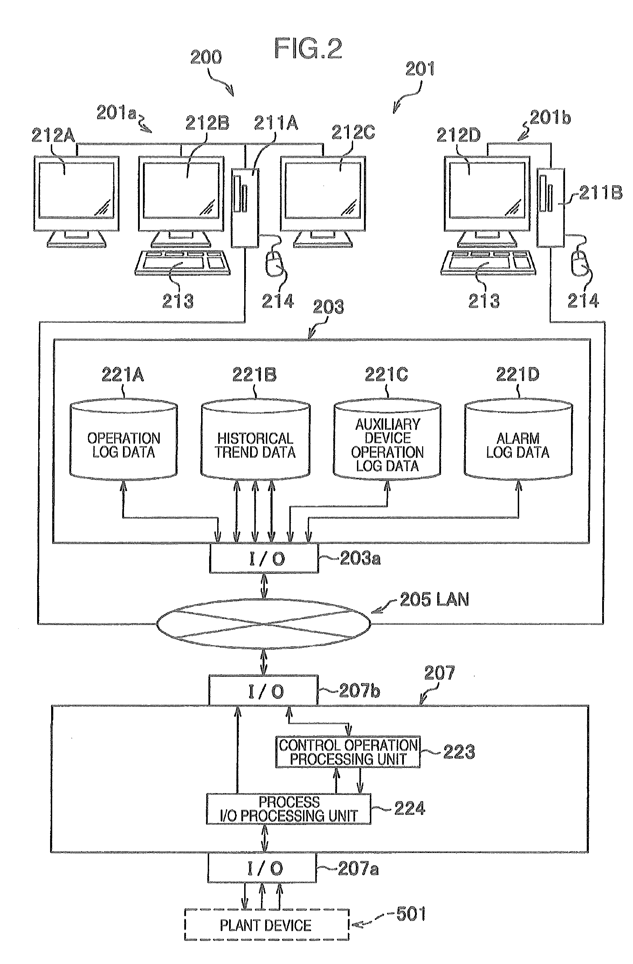

Fig. 2 is a configuration diagram of the plant monitoring control device related to the invention. The plant monitoring control device 200 includes briefly an operation console 201, a data processing device 203, a LAN 205, and a control device 207.

The operation console 201 includes a monitoring control console unit 201a having a function for monitoring process data, an alarm log, an auxiliary device operation log, etc. indicating an operation condition of a plant device 501 and controlling the plant device 501 through the control device by receiving a manual operation command (operation log) from an input unit thereof and a function for setting a data storing process of the data processing device 203 and also includes an event analysis console unit 201b having a function for displaying data, such as the process data, alarm log, auxiliary device operation log, operation log, etc. to support an event analysis, for a purpose of analyzing an event when occurring a trouble, an abnormal operation, etc.
Here, the plant device 501 is a generic name of the respective configuration elements shown in Fig. 1.

The monitoring control console unit 201a includes a plurality of display devices 212A, 212B, 212C; a keyboard 213 and a mouse 214 as an input unit, for example; and a console control unit 211 A configured by a body of a personal computer or an engineering computer, for example, for controlling the display of the plurality of display devices 212A, 212B and 212C.
An operation staff then monitors and controls the plant by seeing the plurality of display devices 212A, 212B and 212C.
The event analysis console unit 201b includes a display device 212D and a console control unit 211B configured by the body of the personal computer or engineering computer, for example, for controlling the keyboard 213, mouse 214 as input unit for example, and display device 212D for display.

The console control unit 211A is connected to the LAN 205 and stores a monitoring control operation program for controlling the display in a not shown internal storage device. The internal storage device of console control unit 211 A also stores an address for each of storage devices 221 A to 221D in the data processing device 203, an address for reading out various data stored in the respective storage devices 22 1 A to 221D, and an identification code of the data, etc., and reads out time series data from the data processing device 203 to display on the display devices 212A to 212C.
In addition, an after-mentioned template for a systematic diagram display is stored in the internal storage device of console control unit 221 A.

An operator who analyzes the event, such as a trouble or abnormal operation, operates the keyboard 213 and mouse 214 as input means in the event analysis console unit 201b to display necessary data on the display device 212D and analyze the event.
The console control unit 211B is connected to the LAN 205 and the not shown internal storage device stores an event analysis support program to make the data processing device 203 search data for the event analysis, acquire necessary data, and control the display of the acquired data. The internal storage device in the console control unit 211B also stores an address of each of the storage devices 221 A to 221D in the data processing device 203, and an address, an identification code, etc for reading out various data stored in the storage devices 221A to 221D,
In addition, the internal storage device in the console control unit 211B also stores after-mentioned event data related information, an after-mentioned data directory, and an after-mentioned template of logic diagram.

Here, the data directory means that it is related to a specific data name of the process data and various log data, a data name identification code for identifying data corresponding to the data name, a system name (attribute) to which the data belongs, a system name identification code corresponding to the system name, an identification code of a specific plant device to which the data corresponds, etc. to the individual process data and log data.
This is used for displaying arbitrary process data and log data by the operator and searching the data name identification code of the data so as to update the above-mentioned event data related information.

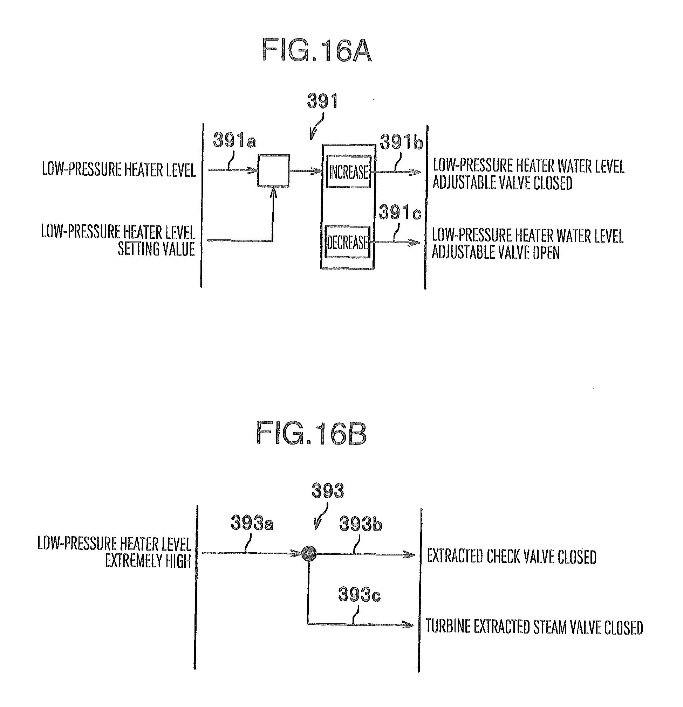

Here, the template of the logic diagram means a graphical template of an alarm logic diagram and a control logic diagram as shown in Fig. 16, for example, which is registered on the internal storage device in the console control unit 211B in advance, and is related to the process data and log data to be an input and output of the alarm logic and control logic to be able to display on an after-mentioned event analysis support screen, as a window.
The event data related information and the template of the logic diagram will be described later.

The data processing device 203 is a data server connected to the LAN 205 via an I/O interface 203a and has the storage devices 221A, 221B, 221C, 221D in which various data acquired from the plant device 501 via the control device 207 and LAN 205 and data acquired from the monitoring control console unit 201 a via the LAN 205 are divided into every data type to be stored on time series.
For example, the storage device 221 A stores operation commands as operation log data entered from the monitoring control console unit 201a on time series. The storage device 221B stores the various process data as historical trend data from the plant device 501 on time series. The various process data also contains control data used in the after-mentioned control device 207.
The control storage device 221C stores the auxiliary device operation log (for example, on and off operation record of the auxiliary device) as auxiliary device operation log data from the plant device 501 on time series. The storage device 221D stores the alarm log as alarm log data from the plant device 501 on time series.

The control device 207 is configured by a process computer and connected with the plant device 501 by a signal line via an I/O interface 207a. A signal entered from the I/O interface 207a is entered into a process I/O processing unit 224 to send data required for controlling the plant device 501 as control target to a control operation processing unit 223, send predetermined data required for the event analysis for the monitor, trouble and abnormal operation in the plant to the monitoring control console unit 201 a via an I/O interface 207b and the LAN 205, and send to the data processing device 203 for storing the data in time series, among the process data and log data from the plant device 501.

The control operation processing unit 223 acquires the operation command entered from the monitoring control console unit 201 a via the LAN 205 and I/O interface 207b to then output data required for controlling the plant device 501 of the above-mentioned control target and a result (control data) of the control operation processing on the basis of the operation command to the plant device 501 via the process I/O processing unit 224 and I/O interface 207a and perform the control, and sends the output control data, as one of the process data, to the data processing device 203 for storing the data in time series via the I/O interface 207b and LAN 205.

In fact, the display devices 212A to 212C in the monitoring control console unit 201a are not limited to three units, but are varied properly dependent on the scale of plant and the number of process data to be monitored,

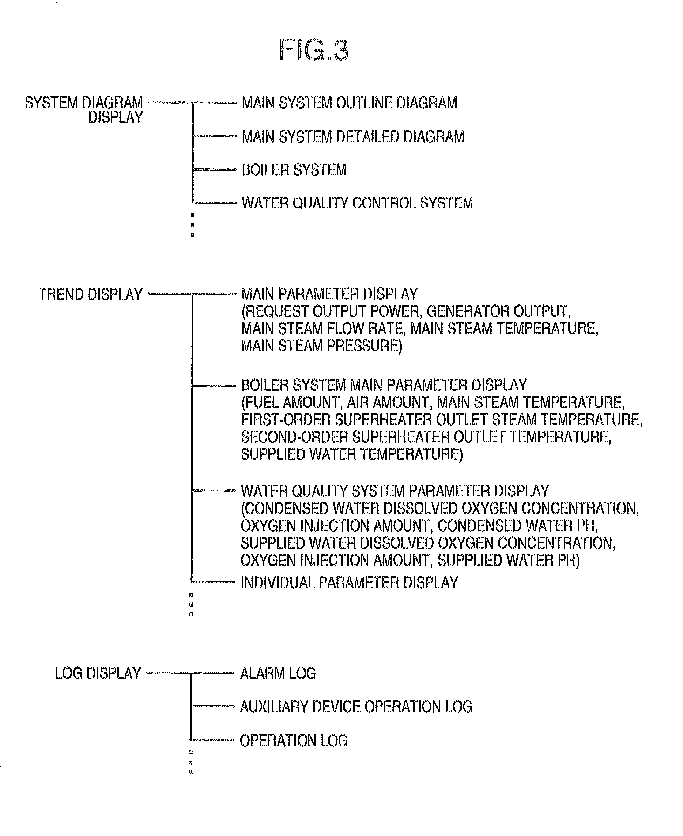

Fig. 3 shows contents to be displayed on the display devices 212A to 212C in the monitoring control console unit 201a, and the contents displayed on the display devices 212A to 212C are changeable by a menu selection from the keyboard 213 and mouse 214, as required.
The screen of display devices 212A to 212C can be specified so as to display one of a systematic diagram display, a trend display of the process data, and a log display including the alarm log and operation log, and data for displaying among these displays can also be displayed selectively.

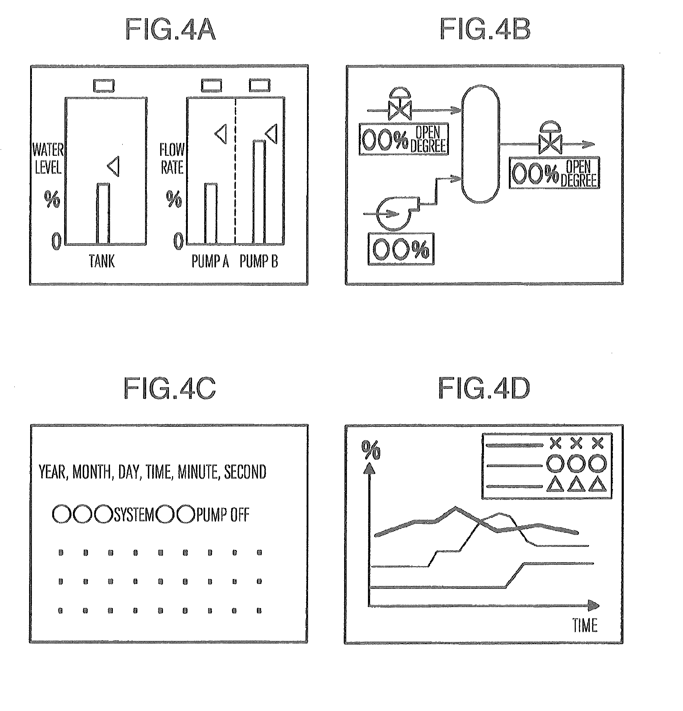

When the trend display is selected and a main parameter display is also selected for one of the display devices 212A to 212C, time variations of a demand output power, a generator output, a main steam flow rate, a main steam temperature and a main steam pressure, are displayed on the screen of that display device from a predetermined time, for example, from two hours earlier to the present, with a line type (color) changed on trend curves displayed on a time in a horizontal axis and a percent in a vertical axis (referred to Fig. 4D).

Figs. 4A to 4D show a data example displayed on the screen in the monitoring control console unit. Fig. 4A shows a setting change of a target value for the water level control in the tank and the operation window for the setting change of the rotation speed of pumps.
Fig. 4B shows a systematic diagram window for displaying a systematic diagram. Fig. 4C shows an alarm window for displaying the alarm log. Fig. 4D shows a trend monitor window for displaying the process data in the trend display.

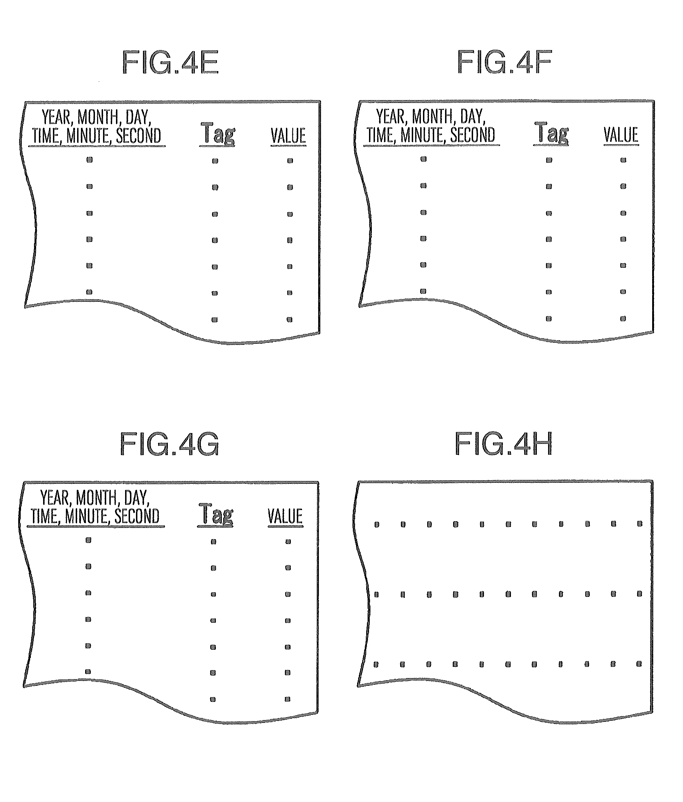

Figs. 4E to 4H show examples each displaying a printed image of a data format to be stored in the storage device of the data processing device. Fig. 4E shows a data record format of the operation log. Fig. 4F shows a data record format of the auxiliary device operation log. Fig. 4G shows a data format of the alarm log. Fig. 4H shows a record format of the historical data having the trend of process data on time series.

As shown in Figs. 4E to 4G, time information containing year, month, day, time, minute and second at which the operation log, auxiliary device operation log and alarm log are occurred, are recorded in a column displayed as "year, month, day, time, minute and second." The identification code indicating a more detailed log item among the operation log, auxiliary device operation log, alarm log class and these classes is recorded in a column Tag. The contents of operation command, for example, the operation command for ON and OFF, a setting value of a pump rotation speed, a setting value of a target water level in the tank, etc. are recorded in a column "value" in the case of the operation log. The operation of ON and OFF is recorded in the column "value" in the case of the auxiliary device operation log. The ON (occurrence) and OFF (recovery) etc. of the alarm are recorded in the column "value" in the case of the alarm log.

The historical data shown in Fig. 4H is recorded together with time information per constant period, for example, one second period and a plurality of process data to be record targets.
In addition, the specific process data among the pieces of process data is set by an input operation from the monitoring control console unit 201a to the data processing device 203 to be recorded in a higher frequency other than the recorded data in the above-mentioned constant period, for example, recorded even for 10 millisecond period with the process data overlapped. The high speed record for a part of the process data like the above can contribute to a determination for causes of the trouble and abnormal operation from a time rate of variation for the process data.
In fact, for the high speed recorded data as mentioned above, it is impossible to store the historical trend data in the storage device 221B, as a storage capacity, for a long period of time, therefore, the record is performed for a time period from a present time back to a predetermined time, for example, the two hours earlier to the present time. The old historical trend data is overwritten and deleted.

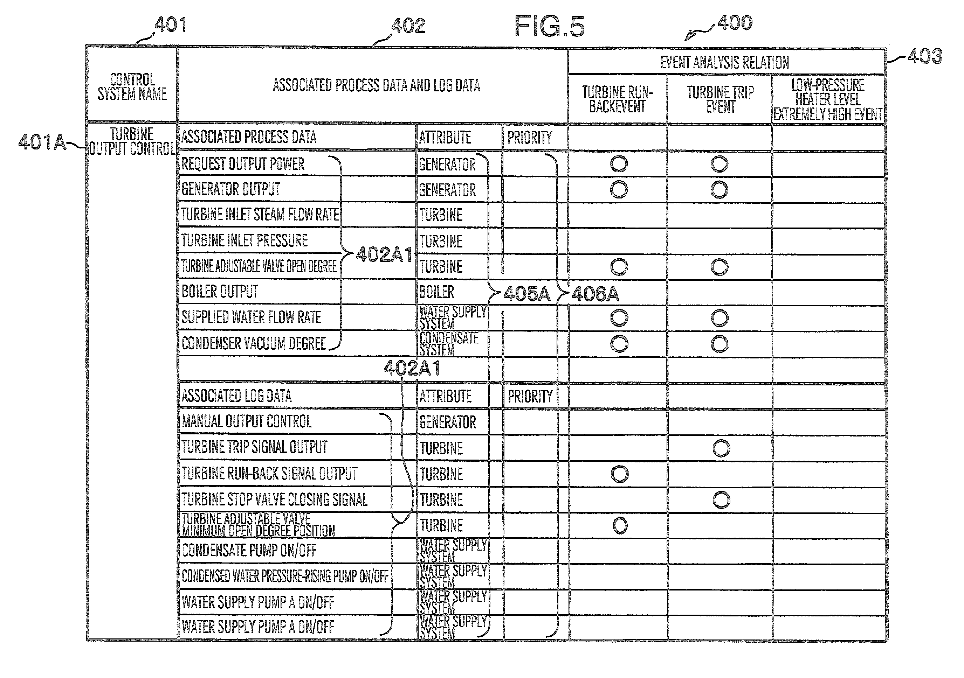

(Event Data Related Information)
Next, event data related information to be stored in the internal storage device of the console control unit 211B will be described with reference to Fig. 5 to Fig. 7 and partly Fig. 16.

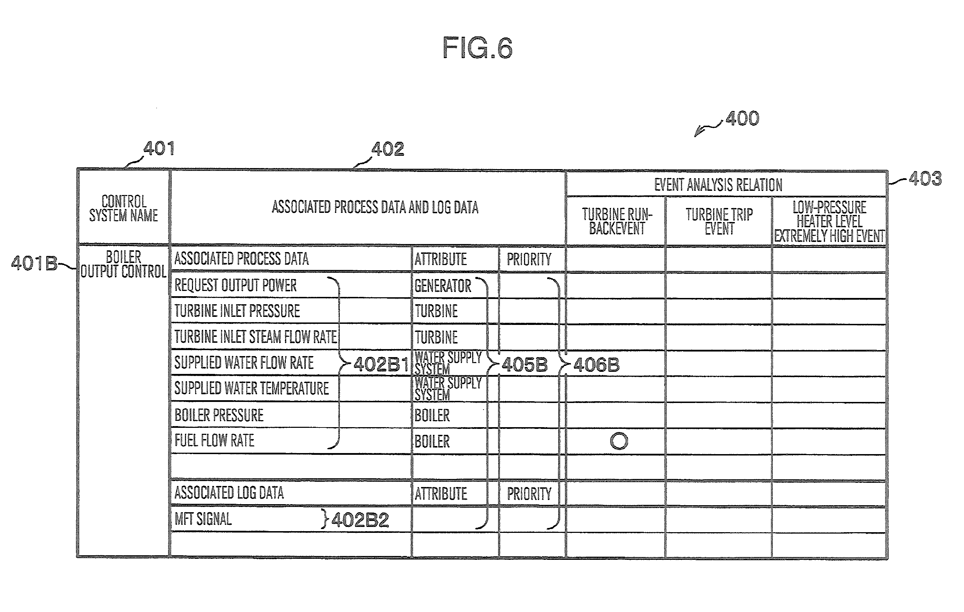

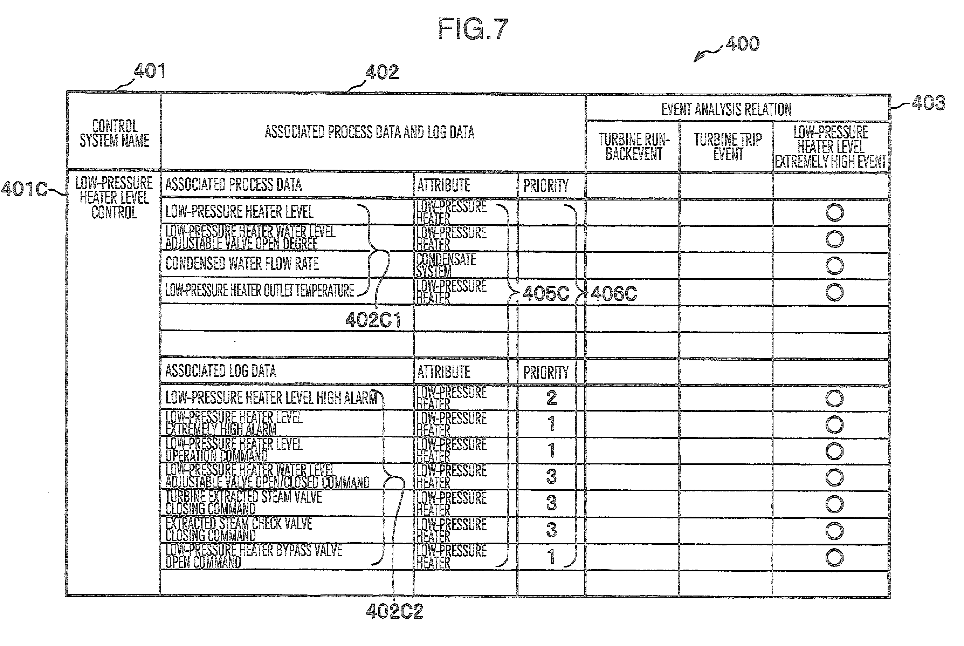

Fig. 5 to Fig. 7 show table forms of the event data related information. Event data related information 400 provides a control system name set in a "control system name" of a column 401. For example, Fig. 5 shows a control system name 401A displayed as a "turbine output control". Fig. 6 shows a control system name 401B displayed as a "boiler output control". Fig. 7 shows a control name 401C displayed as a "low-pressure heater level control" to then provide an "associated process data and log data" in a column 402 and an "event analysis relation" in a column 403 for every control system name.
The "associated process data and log data" in the column 402 is configured by an "associated process data" in a column 402A1, an "associated log data" in a column 402A2, an "associated process data" in a column 402B1, an "associated log data" in a column 402B2, an "associated process data" in a column 402C1, an "associated log data" in column 402C, ... an "attribute" in columns 405A, 405B, 405C, ..., and a "priority" in columns 406A, 406B, 406C, ... for the respective control system names 401A, 401B, 401C, ...

The low-pressure heater level control 401C as the control system name will be specifically described with reference to Fig. 7, as an example. The associated process data includes a "low-pressure heater level" as a signal of a not shown water level sensor in the low-pressure heater water level adjuster 25E (as referred to Fig. 1), a "low-pressure heater water level adjustable valve open degree" as a signal of a not shown open degree position sensor provided on the low-pressure heater water level adjustable valve 26E (as referred to Fig. 1), a "condensed water flow rate" as a signal of the condensed flowmeter 45, and a "low-pressure heater outlet temperature" as a signal of a temperature gauge 46 for measuring an outlet temperature at the low-pressure heater 9.
Here, the associated process data includes not only the low-pressure heater level and low-pressure heater water level adjustable valve open degree to be an input and output in the control logic of low-pressure heater level control as shown in Fig. 16A, but also the condensed water flow rate and low-pressure heater outlet temperature affected on the variation of low-pressure heater level.

The type of associated log data includes alarms of a "low-pressure heater level high" and a "low-pressure heater level extremely high" output from the low-pressure heater water level adjuster 25E, a "low-pressure heater level operation command" manually operated by an operation staff, a " low-pressure heater water level adjustable valve open/closed command" as a control command when the low-pressure heater water level adjuster 25E controls to drive the low-pressure heater water level adjustable valve 26E, a "turbine extracted steam valve closing command" of the auxiliary device operation log for automatically closing the turbine extracted steam valve 24E and the extracted steam check valve 35E in accordance with the control logic shown in Fig. 16B in the case where the control device 207 receives the alarm of the "low-pressure heater level extremely high" from the low-pressure heater water level adjuster 25E, an "extracted steam check valve closing command", and a "low-pressure heater bypass valve" as a command (operation log) for opening the low-pressure heater bypass valve 37 by the operation staff in response to the alarm log "low-pressure heater level extremely high" displayed with a warning sound on either one of the display devices 212at 212C in the monitor control console unit 201a.

Here, the type of associated log data includes not only the auxiliary device operation log "low-pressure heater water level adjustable valve open/closed command" of the low-pressure heater level control shown in Fig. 16A, the "low-pressure heater level extremely high" and "turbine extracted steam valve closing command" and "extracted steam check valve closing command" to be the input and output in the control logic for the alarm of low-pressure heater level control shown in Fig. 16B, but also the "low-pressure heater level high" to be a previous stage of the "low-pressure heater level extremely high", and a "low-pressure heater bypass valve opening command" of a manual operation command affected on the variation of low-pressure heater level.

In addition, here, for a purpose of easily explaining the event data related information, the description has been concerned with all of the specific names for the control system name 401, the "associated process data" in the columns 402A1, 402B1, 402C1, and the "associated log data" in the columns 402A2, 402B2, 402C2. However, practically, the description has been made for the operator who easily understands for creating and using the event data related information. A previously determined data name identification code corresponding to the data names is assigned to the respective data names, and the event analysis support program is executed by the data name identification code in the event analysis console unit 201b.

Further, columns 405A, 405B, 405C, ... of the "attribute" contained in the column 402 of "associated process data and log data" indicate that whether the associated process data and associated log data indicate which of system data corresponds to the thermal power plant 100, and the system name identification codes are also respectively assigned to system names.

Furthermore, columns 406A, 406B, 406C, ... of the "priority" contained in the column 402 of "associated process data and log data" indicate a priority to be omitted for a display since a display priority is low, when the associated log data is displayed on the event analysis support screen to analyze the event and the associated log data cannot be displayed on one screen since the types of log data are too many.

As above, the description has been concerned with the example taking the low-pressure heater level control 401C as a control system name, and the description for the turbine output control and boiler output control, etc. are also similar thereto.
In fact, the data name of the associated process data and associated log data are enumerated on the table of the event data related information for every control system name, and the process data and log data are allowed to be overwritten among a plurality of control system names.

A column 403 of an "event analysis relation" shows three event names (name of event), that is, a turbine run-back event, a turbine trip event and a low-pressure heater level extremely high event, which is however not limited thereto. The event is then divided into every analysis event in columns, and a flag is applied to the associated process data and log data to be targeted to display on the event analysis support screen when performing the event analysis (Fig. 5 to Fig. 7 indicate that the flag is applied with O mark). Here, the related process data and log data applied with the flag, for performing the event analysis, correspond to an "event associated data" written in claims.

In addition, a necessity for editing and updating the event data related information occurs when occurring a necessity for increasing the target of the analysis event, adding the process data and log data associated to the event in accordance with a result of analyzing a cause of the past trouble and abnormal operation, additionally applying the flag to be displayed on the event analysis support screen, etc. In this case, a skilled operator or an engineer in a company in charge of the software management of the plant monitoring control device 200, operates the event analysis console unit 201b to update the event data related information stored in the built-in storage device in the console control unit 211B.
In this case, the above-mentioned data directory is used to be able to easily search the log data and process data by using the above-mentioned system name (corresponding to the attribute in Fig. 5 to Fig. 7) as a keyword, so that an identification code for specific data can be searched easily.

### 〈〈Control Flow of Event Analysis Support 〉〉

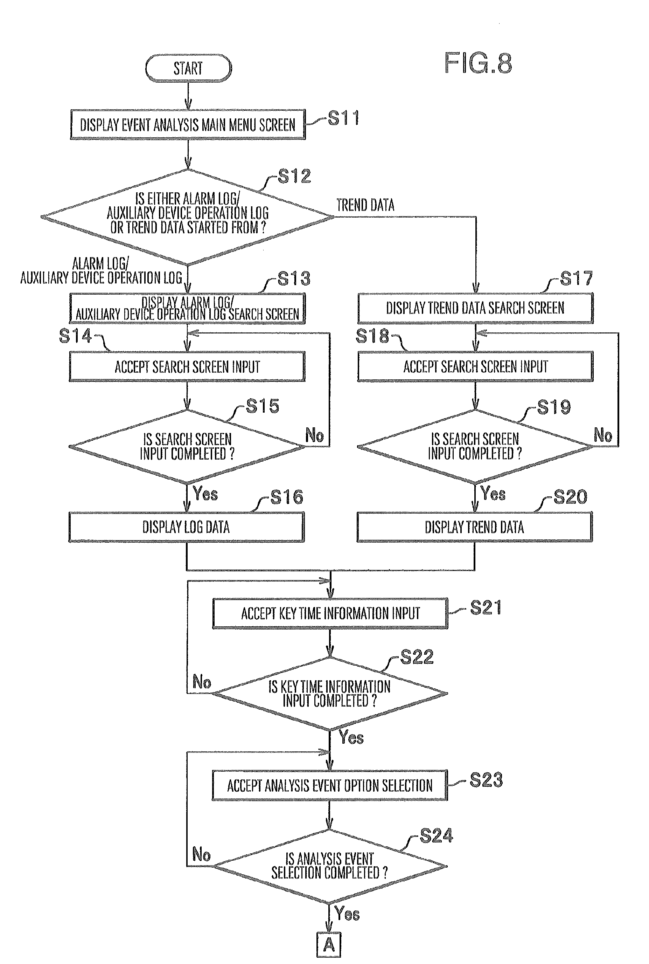

Next, a control flow of the event analysis support will be described with reference to Fig. 8 to Fig. 17 in the case where the operator uses the event analysis console unit 201b to analyze the event on the event analysis support screen.

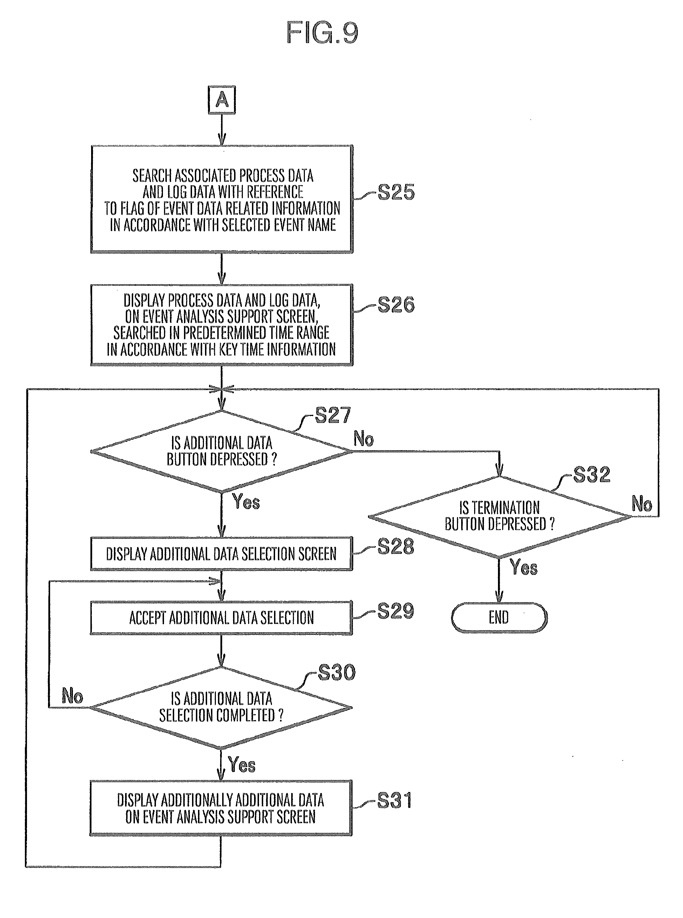

Fig. 8 and Fig. 9 show flowcharts of a control flow of displaying the screen etc. for supporting the event analysis in the event analysis console unit 201b.

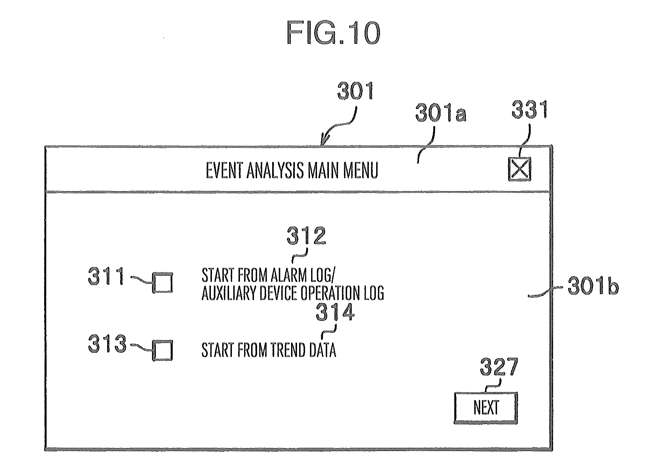

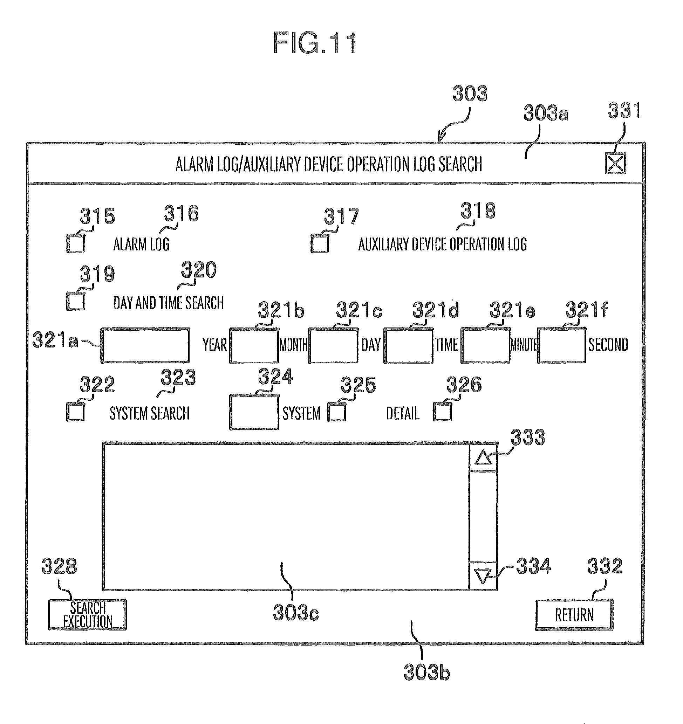

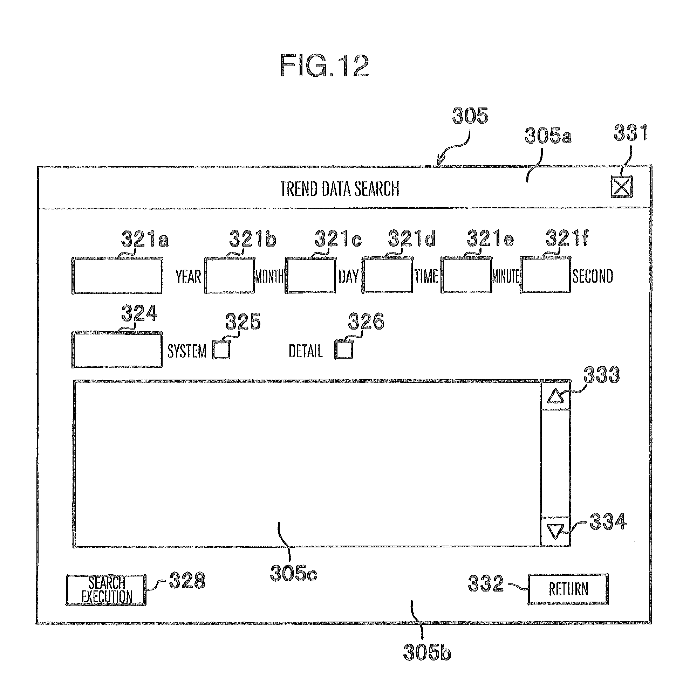

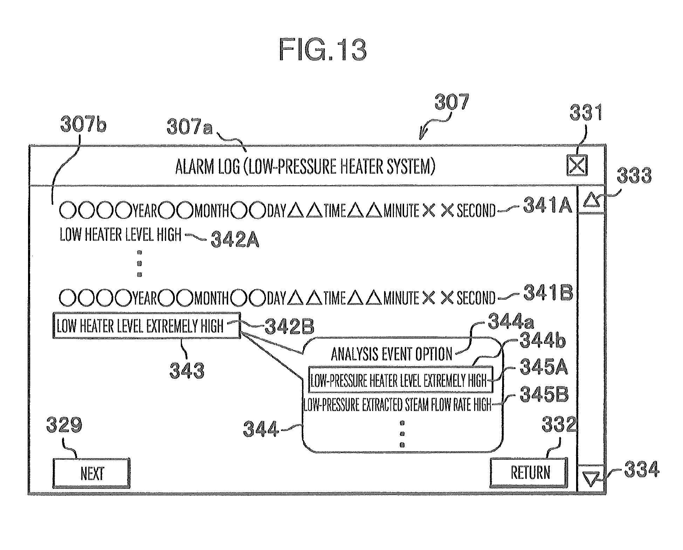

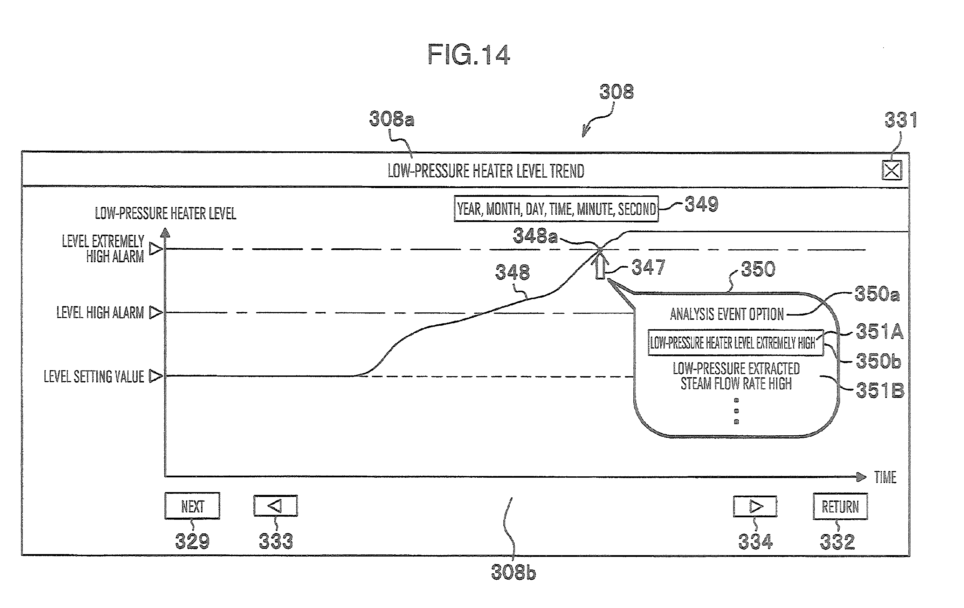

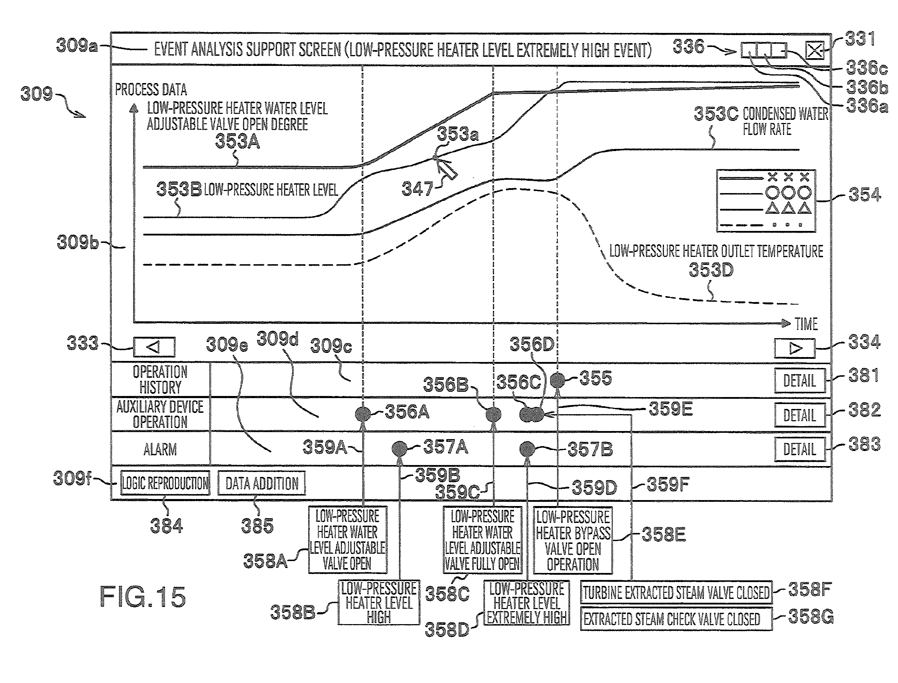

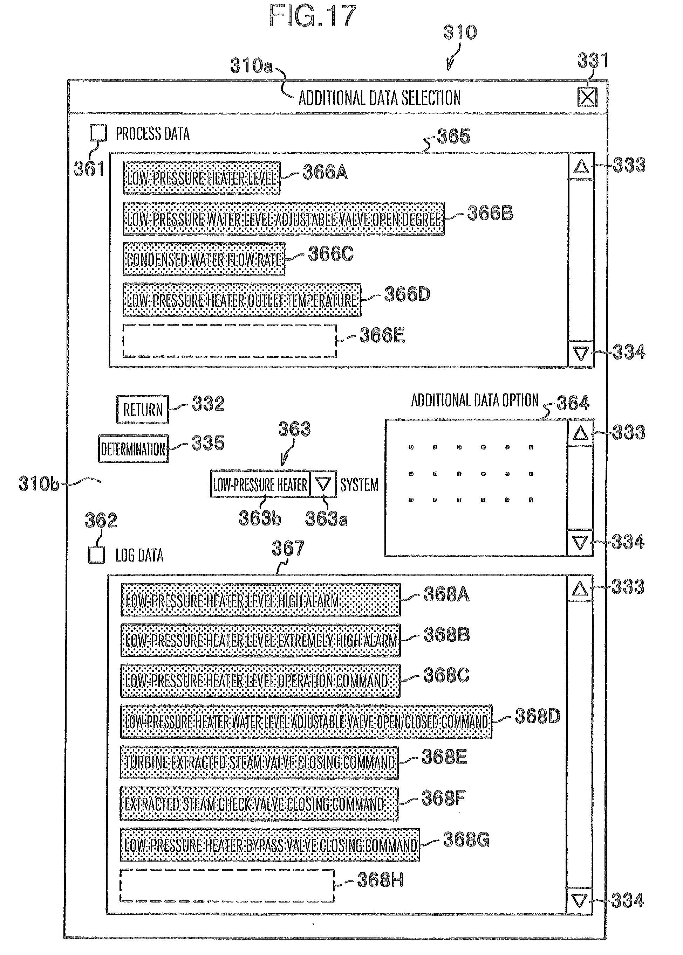

Fig. 10 to Fig. 17 show screen examples to be displayed on the display device in the control flow of the event analysis support. Fig. 10 shows an event analysis main menu screen. Fig. 11 shows an alarm/auxiliary device operation log search screen in the case where the search of event associated data is performed from the alarm log or auxiliary device operation log. Fig. 12 shows a trend data search screen in the case where the search for event associated data is performed from the trend data. Fig. 13 shows a screen example for explaining a search operation of the event associated data in the specified alarm log. Fig. 14 shows a screen example for explaining the search operation of the event associated data in the specified trend data. Fig. 15 shows a diagram for explaining the event analysis support screen. Fig. 16A and Fig. 16B show a display example of a logic diagram, in which Fig. 16A shows a control logic of the low-pressure heater level and Fig. 16B shows an alarm logic of the low-pressure heater level extremely high. Fig. 17 is a diagram for explaining an additional data selecting screen.

Normally, the low-pressure heater level stays before and after a setting value since the open degree of the low-pressure heater water level adjustable valve 26E (as referred to Fig. 1) is adjusted by the low-pressure heater water level adjuster 25E in accordance with the control logic shown in Fig. 16A, even though the main steam flow rate increases to then increase the condensed water flow rate and the extracted steam amount from the low-pressure turbine 5C and also increase the low-pressure heater level. Conversely, the low-pressure heater level stays before and after the setting value since the open degree of the low-pressure heater water level adjustable valve 26E is adjusted by the low-pressure heater water level adjuster 25E in accordance with the control logic shown in Fig. 16A, even though the steam flow rate decreases to then decrease the condensed water flow rate and the extracted steam amount from the low-pressure turbine 5C and also decrease the low-pressure heater level. Incidentally, when the low-pressure heater level exceeds the alarm level of high caused by some sort of trouble to thereby output a "low-pressure heater high" signal from the low-pressure heater water level adjuster 25E and also exceeds the alarm level of extremely high to thereby output a "low-pressure heater extremely high" signal from the low-pressure heater water level adjuster 25E, the control device 207 received the "low-pressure heater extremely high" signal from the low-pressure heater water level adjuster 25E performs a closing operation control for the turbine extracted steam valve 24E and extracted steam check valve 35E in accordance with the alarm logic shown in Fig. 16B to stop the steam extraction from the low-pressure turbine 5C and prevent the back flow from the body side of low-pressure heater 9 to the low-pressure turbine 5C.

An operation staff confirms the warning sound; "○○○○ year, ○○ month, ○○ day, ΔΔ time, ΔΔ minute, ×× second, low-pressure heater level extremely high" displayed on the alarm log screen of either one of the display devices 212A to 212C in the monitoring control console unit 201a; and "○○○○ year, ○○ month, ○○ day, ΔΔ time, ΔΔ minute, ×× second (low-pressure) turbine extracted steam valve closed" and "○ ○○○ year, ○○ month, ○○ day, ΔΔ time, ΔΔ minute, ×× second (low-pressure turbine) extracted steam check valve closed" displayed on the auxiliary device operation log screen, to then operate for opening the low-pressure heater bypass valve 37 by the manual operation from the monitoring control console unit 201a.
By operating the opening of low-pressure heater bypass valve 37, "OOOO year, ○○ month, ○○ day, ΔΔ time, □□ minute, ∇∇ second low-pressure heater bypass valve open" is displayed on the display screen of the operation log.

In response to the occurrence of the above-mentioned abnormal event, one of operation staffs other than those who work an operation monitoring service for the plant, operates the event analysis console unit 201b to analyze the event.
Afterward, the operation staff who analyzes the event is referred to as an operator. Hereinafter, a description will be concerned with flowcharts in Fig. 8 and Fig. 9.

### (Event Analysis Main Menu)

The operator operates the event analysis console unit 201b to start the event analysis support program and make display an event analysis main menu screen 301 as shown in Fig. 10 (a step S11: event analysis main menu screen display).
The event analysis main menu screen 301 is configured by a title column 301a displayed as an "event analysis main menu" and an operation column 301b to be applied a checkmark for a selectable operation. The operation column 301b has a menu item 312 displayed as a "start from alarm log/auxiliary device operation log" and a menu item 314 displayed as a "start from trend data", the left side of which provide respectively checkmark boxes 311, 313. The checkmark (√ is displayed in the checkmark boxes 311, 313 by operating the mouse 214 (as referred to Fig. 2) as input means to be able to select either one of the above-mentioned items 312, 3 14.
In fact, a termination button 331 is provided on the event analysis main menu screen 301, and an operation button 327 is provided with a "next" for proceeding to a next screen.

At a step S12, the process checks whether the alarm log/auxiliary device operation log or the trend data starts. When the "start from alarm log/auxiliary device operation log" in the item 312 is selected and the operation button 327 of the "next" is depressed, the process proceeds to a step S 13. When the "start from trend data" in the item 314 is selected and the operation button 327 of the "next" is depressed, the process proceeds to a step S 17.
At the step S13, an alarm log/auxiliary device operation log search screen 303 is displayed as shown in Fig. 11. An input of the search screen is accepted (step S 14) to check whether the input of search screen is completed (step S15). If the input is completed (Yes), the process proceeds to a step S16, and if the input is not completed, the process proceeds to the step S14.

### (Alarm Log/Auxiliary Device Operation Log Search Screen)

The alarm log/auxiliary device operation log search screen 303 is configured by a title column 303a displayed as an "alarm log/auxiliary device operation log search" and an operation column 303b for applying the checkmark of the selectable operation, receiving brief time information of occurring the event, and selecting the type of alarm log/auxiliary device operation log. The operation column 303b has a menu item 316 displayed as an "alarm log" and a menu item 318 displayed as an "auxiliary device operation log", the left side of which provide respectively checkmark boxes 315, 317. The checkmark (√ is displayed in the checkmark boxes 315, 317 by operating the mouse 214 (as referred to Fig. 2) as input means to be able to select either one of the above-mentioned items 316, 318.

Further, a checkmark box 319 is provided on the left side of a menu item 320 displayed as a "date and time search". By applying the checkmark to the checkmark box 319, the time information containing year, month, day, time, minute and second can be entered into input fields 321a, 321b, 321c, 321d, 321e, 321f, for narrowing a time range by setting and displaying a start time at which the log data is displayed among the selected pieces of log data.
In addition, the time information is not required to be entered into all of fields, but if it is briefly entered into the fields from large to small, for example, entered into year, month, day and time, the log data in the range from 0 minute and subsequent range are displayed.

Further, since it is considered that a visual check for the log data is also cumbersome in the case of using only the selection of either the alarm log or auxiliary device operation log and the start time information for the display, a checkmark box 322 is further provided on the left side of a menu item 323 displayed as a "system search" to apply a checkmark to the checkmark box 322. In consequence, the selection for the system name and the detailed log data name can be made such that a tangible log data name in the selected log data can be specified.

When a checkmark is applied to the checkmark box 322 and a checkmark is also applied to the checkmark box 325 displayed as a "system", a system name to be an option registered in advance is displayed on a selection column 303c. One system name displayed on the selection box 303c is clicked and selected by the mouse 214 to display it on a field 324, the left side of which displays as a "system". Thereafter, a checkmark is applied to a checkmark box 326 displayed as a "detail" to display the log data to be the option registered in advance and related to the previously selected system name on the selection column 303c. One of log data names displayed on the selection column 303c is clicked and selected by the mouse 214 to change a display color of the log data name and become a selectable condition.

Finally, when an operation button 328 displayed as a "search execution" is depressed, it means that the input is completed on the screen, the process proceeds to the step S16. However, the process at the step S 14 continues until the operation button 328 is depressed. At the step S16, the log data is displayed.
In addition, it is not necessarily to apply the checkmark to the checkmark box 322 in the "system search" in the item 323. In this case, one of log data selected from either the alarm log or auxiliary device operation log is all displayed for a time from the entered display start time information by the time of present, and the operator searches it by the visual check among the log data.
Further, it is not necessarily to select the system name and detailed log data name even if the checkmark is applied to the checkmark box 322 of the "system search" in the item 323. When the operation button 328 of a "search execution" is depressed without selecting the detailed log data name, the log data related to the selected system name in the other selected log data from the alarm log and auxiliary device operation log is displayed with all of the entered display start time information by the time of present, and the operator searches for the display with the visual check.
In fact, buttons indicated by symbols 333, 334 are scroll buttons for scrolling the selection column 303c. The termination button 331 and an operation button 332 displayed as a "return" for making proceed to the previous screen (event analysis main menu screen 301) are provided on the alarm log/auxiliary device operation log search screen 303.

At the step S12, if the display to be started from the trend data is selected, the process proceeds to the step S17 to display a trend data search screen 305 as shown in Fig. 12, accept an input of search screen (step S 18), and check whether the input of search screen is completed (step S19). The process proceeds to a step S20 if the input is completed (Yes), and the process at the step S 18 continues if the input is not completed (No).

### (Trend Data Search Screen)

The trend data search screen 305 is configured by a title column 305a displayed as a "trend data search" and an operation column 305b for applying the checkmark of the selectable operation, entering brief time information of the event occurrence, and selecting the type of process data. The operation column 305b provides such that the time information containing year, month, day, time, minute and second can be entered into an input fields 321a, 321b, 321c, 321d, 321e, 321f for narrowing a display time range by setting the start time to be displayed. Further, the field 324 is provided on the left side of the item displayed as a "system", the checkmark box 325 is provided on the right side of the item displayed as a "system", and the checkmark box 326 displayed as a "detail" is provided. A selection column 305c is also provided such that a specific process data name can be specified by applying the checkmark to the checkmark boxes 325, 326, so that the system name and the detailed process data can be selected.

The checkmark is applied to the checkmark box 325 to display the system name to be an option previously registered in the selection column 305c. One of the system names displayed on the selection column 305c is clicked and selected by the mouse 214 to display the selected system name on the field 324 of the left side displayed as the "system". Thereafter, the checkmark is applied to the checkmark box 326 displayed as the "detail" to display the process data name to be a previously registered option related to the previously selected system name on the selection column 305c. One of the process data names displayed on the selection column 305c is clicked and selected by the mouse 214 to change the displayed color of the process data name and become a selectable condition.
In addition, the time information is not required to be entered into all of columns, but if it is briefly entered into the fields from large to small, for example, entered into year, month, day and time, the log data in the range from 0 minute and subsequent range are displayed.

Finally, when the operation button 328 displayed as the "search execution" is depressed, it means that the input is completed on the screen. The process then proceeds to the step 520. The process at the step S18 continues until the operation button 328 is depressed.
At the step S20, the trend data is displayed.
In fact, the buttons indicated by symbol 333, 334 are a scroll button for scrolling the selection column 305c. The trend data search screen 305 provides the termination button 331 and operation button 332 displayed as the "return" for making proceed to the previous screen (event analysis main menu screen 301).

Next, the process proceeds to a step S21 from the step S16 or step S20 to accept a key time information input and check whether the input of key time information is completed (step S22). If completed (Yes), the process proceeds to a step S23, and if not completed (No), the process at the step S21 continues. At the step S23, an analysis event option selection is accepted to then check whether the selection of analysis event is completed (step S24). If the selection of analysis event is completed (Yes), the process proceeds to a step 525, and if not completed (No), the process at the step S23 continues.

### (Alarm Log (Low-Pressure Heater System) Screen)

Next, the process from the step S21 to the step S24 will specifically be described below. First, when the process proceeds to the step S16 from the step S21, an alarm log display screen 307 as shown in Fig. 13 is displayed as an example where the search is performed from a specified display start time information to subsequent time for the alarm log data of low-pressure heater system among the pieces of alarm log data, at the step S 14. The alarm log display screen 307 is configured by a title display column 307a displayed as an "alarm log (top-pressure heater system)" and an alarm log display column 307b. The alarm log display column 307b provides the scroll buttons 333, 334, an operation button 329 displayed as a "next" and the operation button 332 displayed as a "return" for returning to the previous screen.
The alarm log display screen 307 as an example displays an alarm log data name 342A displayed as a "low-pressure heater level high" occurred at time information 341 A and an alarm log data name 342B displayed as a "low-pressure heater level extremely high" occurred at time information 3418.

Here, the operator operates and left-clicks the mouse 214 with a cursor hit to the alarm log data name 342B to change a background color 343 of the alarm log data name 342B into a color indicating the selectable condition, and in response to the operation by the operator, the time information 341B is entered as the key time information at the steps S21, S22. Next, the operator right-clicks the mouse 214 with the cursor hit to the alarm log data name 342B to open an analysis event option display window 344 and display an event option name 345A displayed as the "low-pressure heater level extremely high", an event option name 345B displayed as a "low-pressure heater extracted steam flow rate high", etc. below from a window name 344a displayed as an "analysis event option" in an analysis event option display window 344.
The operator moves the cursor in the analysis event option display window 344 to right-click the mouse with the cursor pointed to a background color 344b selecting the event option name 345A and depresses the operation button 329 displayed as the "next". In consequence, the event option name 345A is selected as an analysis event at the steps 523, S24.
At a time before depressing the operation button 329, the previously selectable operation is canceled and a new operation becomes an effective state by moving the cursor to then perform the click operation, so that the selection of alarm log data name, the input of key time information and the analysis event can be changed.

In addition, the analysis event option is registered in advance for every alarm log name, that is, registered as an index in a not shown built-in storage device of the console control unit 211B, so that an appropriate analysis event can be selected for every alarm log data name, When the event name desired by the operator is not contained in the selected options displayed on the analysis event option display window 3444, another window may be open to be able to select for searching an event name selectable option.
In fact, a low-pressure heater level trend display screen 308 also provides the termination button 331.

### (Low-Pressure Heater Level Trend Display Screen)

Next, when the process proceeds to the step S21 from the step S20, for example, when the search performs from the specified display start time information to the subsequent time for the low-pressure heater level among the pieces of process data at the step S 18, the low-pressure heater level trend display screen 308 is displayed as shown in Fig. 14. The low-pressure heater level trend display screen 308 is configured by a title display column 308a displayed as a "low-pressure heater level trend" and a trend data display column 308b for displaying the trend data with a graph shaped. In an example shown in Fig. 14, the tend data display column 308b displays a graph showing a time on the horizontal axis and a low-pressure heater level on the vertical axis. The scroll buttons 333, 334 are provided below from the time axis in the trend data display column 308b to be able to move to the left and right in a time range of the display, by operating the scroll button. In the graph, a target value of automatically controlling the low-pressure heater level is displayed as a "level setting value". A level high alarm setting value is displayed as a "level high alarm". A level extremely high alarm setting value is displayed as a "level extremely high alarm". These displays are displayed together with a maker, a dash line and an alternate long and short dash line.

Further, the low-pressure heater level trend display screen 308 provides the operation button 329 displayed as the "next" and the operation button 332 displayed as the "return" for returning to the previous screen (trend data search screen 305).

Here, the operator operates the mouse 214 (as referred to Fig. 2) to left-click it with the point of cursor 347 (arrow symbol) hit to a curve 348 of low-pressure heater level trend data. In consequence, a dot mark 348a is displayed on a data point to which the point of cursor 347 (arrow symbol) hits on the curve 348, and time information 349 of the data point is displayed on the vicinity of dot mark 348a as the key time information. In the above-mentioned operation by the operator, the time information 349 is entered as the key time information at the steps S21, S22.
In fact, the operator again left-clicks by hitting the point of cursor 347 to the dot mark 348a to erase the display of dot mark 348a and time information 349 and cancel the input of key time information.

After completing the input of key time information, the operator right-clicks the mouse 214 with the cursor hit to the dot mark 348a to thereby open an analysis event option display window 350 and display an event option name 351A displayed as the "low-pressure heater level extremely high" and an event option name 351B displayed as the "low-pressure heater extracted steam flow rate high" below from a window name 350a displayed as an "analysis event option" on the analysis event option display window 350, as an example.
The operator moves the cursor 347 in the analysis event option display window 350 to point the event option name 351A by the cursor 347, right-click with a background color 350b selected, and depress the operation button 329 displayed as the "next". In this way, the event option name 351A is selected as the analysis event at the steps S23, S24.
At a time before depressing the operation button 329, the previously selectable operation is canceled and a new operation becomes an effective state by moving the cursor 347 to then perform the click operation, so that the selection of the time information 349 and analysis event can be changed.

In addition, the analysis event option is registered for every process data name in advance, that is, registered in a not shown built-in storage device of the console control unit 211B as an index. Therefore, an appropriate analysis event can be selected for every process data name. When the event name desired by the operator is not contained in the selectable options displayed on the analysis event option display window 350, another window may be open to be able to select for searching an event name selectable option.
In fact, the low-pressure heater level trend display screen 308 also provides the termination button 331.

After the step S24, the process proceeds to the step S25 along a symbol "A" to then refer to a flag (indicating O mark in the column 403 of an "event analysis relation" in Fig. 5 to Fig. 7) of the event data related information 400 on the basis of the selected event name and search the associated process data and log data. The process data and log data, in a predetermined time range, searched at the step S25 is then displayed on an event analysis support screen 309 (step S26), on the basis of the key time information.

### (Event Analysis Support Screen)

The event analysis support screen 309 as shown in Fig. 15 is configured by a title display column 309a displayed as an "event analysis support screen (low-pressure heater level extremely high event)"; a trend data display column 309b for displaying the trend data in a graph shape; an operation history column 309c positioned at the right side from a display "operation history" for displaying an occurrence time of the log data, by 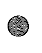 mark 355, searched as an operation log related to the event of analysis target; an auxiliary device operation history column 309d positioned at the right side from a display "auxiliary device operation" for displaying an occurrence time of the log data, by 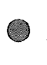 marks 356Ato 356D, searched as the auxiliary device operation log related to the event of analysis target; an alarm history column 309e positioned at the right side from a display "alarm" for displaying an occurrence time of the log data, by 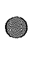 marks 357A to 357B, searched as the alarm log related to the event of analysis target; and an operation button column 309f disposing and displaying various operation buttons. A time axis on the graph of the trend data is common with that of the log data, and a temporal relative relation can be acquired from the graph.

Further, the title display column 309a provides a time axis operation button 336 for extending and contracting the time axis on the display, other than the termination button 331.
Normally, the time axis is shifted later to the right or left with data by the scroll buttons 333, 334 on the display screen for two hours time period, however, the time axis can be extended and contracted as required.
The time axis operation button 336 provides, for example, a contraction button 336a, a standard button 336b and an extension button 336c. The contraction button 336a is depressed to temporarily display a small window for displaying a contraction ratio and select the appropriate contraction ratio by the left-click with the cursor 347 pointed. The extension button 336c is depressed to temporarily display a small widow for displaying an extension ratio and select the appropriate extension ratio with the cursor 347 pointed.
In this way, the time axis is extended or contracted to thereby extend or contract it from the center from which the time is displayed to the left and right on the time axis.

In Fig. 15, the trend data display column 309b displays graphs, including (1) a curve 353A indicating a time transition of the low-pressure heater water level adjustable value open degree, (2) a curve 353B indicating the time transition of the low-pressure heater level, (3) a curve 353C indicating the time transition of the condensed water flow rate, and (4) a curve 353D indicating the time transition of the low-pressure heater output temperature, searched as the process data related to the event of analysis target with a time set to the horizontal axis. The curves 353A to 353D are displayed respectively with line types varied with display colors, and the process data name represented by the curves 353A to 353D is displayed in correspondence with the line type on an explanatory note window 354.

In addition, the time range of the process data displayed on this case is based on the key time information accepted at the steps S21, S22. The display start time is set to a first predetermined time earlier from the key time information, for example, four hours earlier. The display termination time is set to a second predetermined time later elapsed from the key time information, for example, ten minutes later. A display time zone can be moved in excess of the time range by the scroll buttons 333, 334. The 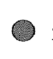 marks 355, 356A to 356D, 357A, 357B in the operation history column 309c, auxiliary device operation history column 309d and alarm history column 309e are also moved together with the movement of the time axis on the tend data display by the scroll buttons 333, 334. Likewise to the extension and contraction operation of the time axis by the above-mentioned time axis operation button 336, 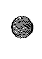 marks of the operation history column 309c, auxiliary device operation history column 309d and alarm history column 309e are moved so as to fit together with the extension and contraction of the time axis.

The 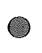 marks of 355, 356A to 356D, 357A, 357B of the operation history column 309c, auxiliary device operation history column 309d and alarm history column 309e respectively provide log data name fields 358A to 358G each indicating the log data name to thereby display arrows 359A to 359G (arrow 359G is overlapped with the arrow 359F in Fig. 15 to therefore be omitted) indicating 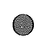 marks 355, 356A to 356D, 357A, 357B from the log data name fields 358A to 358G
The right end of the operation history column 309c, auxiliary device operation history column 309d and alarm history column 309e provide respectively operation buttons 381, 382, 383 each displayed as a "detail".

As shown in Fig. 15, the operation history column 309c, auxiliary device operation history column 309d and alarm history column 309e can display many pieces of log data, by displaying the log data with 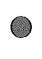 marks, more than characters to be displayed on the log display screen shown in Fig. 4C on which the log data related to the event of analysis target is displayed.
In the example shown in Fig. 15, the log data can be displayed with as many as ten pieces, however, the display for more than that cannot be performed displaying on the log data name field. Therefore, the log data to be displayed is thinned such that it becomes as many as ten pieces. To this end, the log data having a low priority number is thinned on a priority basis, as shown in the column 406C displayed as a "priority" in Fig. 7.
Either one of the operation buttons 381, 382, 383 is depressed to display in detail the operation history column 309c, auxiliary device operation history column 309d, alarm history column 309e corresponding respectively to the operation buttons 381, 382, 383. The only displayed history column and 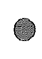 marks corresponding to the thinned log data name are displayed with a shape of a hop-up window and shapes indicated by the arrow in detail extended from the log data name field. The termination button 331 of a not shown hop-up window is depressed to close the detailed displaying hop-up window.
The operation button field 309f provides a logic reproduction button 384 displayed as a "logic reproduction" and an operation button 385 displayed as a "data addition".

In fact, in the event analysis support screen 309 in Fig. 15, the command "open" of the low-pressure heater water level adjustable valve 26E continues after the time of displaying 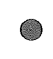 mark 356Aby the time of a "low-pressure heater water level adjustable valve fully open" of 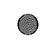 mark 356B. However, in such case, the log data for a period until the command "open" is released, is thinned automatically in the display.

### (Operational Reproduction of Logic)

Incidentally, as mentioned above, the template of the control logic diagram and alarm logic diagram is stored in an internal storage device of console control unit 211B in the event analysis console unit 201b. The following description will be concerned with an operational reproduction of the logic by using the above condition.
For example, a template 391 of the control logic used for the low-pressure heater level control shown in Fig. 16A and a template 393 of the control logic used for the alarm control of the low-pressure heater level extremely high shown in Fig. 16B, contain not only graphic data for displaying the logic diagram, but also, for example, a display program written by an object-oriented program language, such as Java (registered trademark). This display program also has constant numbers for use in the control logic to therefore execute a logic operation for the control logic. Specifically, it has an identification code of the data name of the process data and log data to be the input of control logic in correspondence to the logic operation of control logic. In this way, the logic operation is performed by linking with the process data and log data displayed on the event analysis support screen 309 on the basis of the identification code.

The template for reproducing the logic operation of such logic control is related to the identification code of template and the identification code of the process data name and log data name to be stored in the built-in storage device of console control unit 211B in advance.

The logic operation is executed by the following procedure.
(1) Either a data point on the process data curve to be the input of control logic is pointed by the cursor 347 to then be selected by left-clicking the mouse 214 (as referred to Fig. 2) and display the dot mark 353a, or the log data of 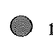 marks of the operation history column 309c, auxiliary device operation history column 309d and alarm history column 309e to be the input of control logic is pointed by the cursor 347 to then be left-clicked by the mouse 214 and change 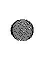 mark into the color of selectable condition.
(2) The logic reproduction button 384 is depressed.
   In this way, the control logic diagram is displayed. For example, as shown in Fig. 15, the dot mark 353a is displayed on the curve 353B indicating the low-pressure heater level. Thereafter, the logic reproduction button 384 is depressed to display the template 391 of the control logic in Fig. 16A. Further, for example, 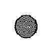 mark 357B corresponding to the alarm log of the "low-pressure heater level extremely high" in Fig. 15 is pointed by the cursor 347 to then be selected by the left-click. Thereafter, the logic reproduction button 384 is depressed to display the template 393 of the control logic in Fig. 16B.
   If the process data selected by (1) or the log data of 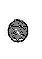 mark is not the input of control logic, a message "appropriate control logic is not present" is displayed temporarily on a balloon window.
(3) The display program written by the above-mentioned object-oriented language for the templates 391, 393 of control logic is executed to read automatically either a process data value at a time point corresponding to the dot mark 353a or a log data value (ON or OFF) at a time point corresponding to 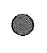 mark 357B. The logic operation is then executed to display its result on the output side of template 391 or 393.

In fact, when the input data of control logic is plural pieces, if one piece of input data is specified as mentioned above, the time information can also be acquired when the one piece of input data is specified. Therefore, when the data at the time information is searched for displaying the event analysis support screen 309, the other input data is acquired from the screen. When the search is not performed for displaying the event analysis support screen 309, the input data is acquired from the data processing device 203 to execute the logic operation on the basis of the above-mentioned data directory.

For example, the template 391 indicates that, when a control output is toward increasing the water level as a result of the logic operation, an arrow 391b at an output side is displayed by a flush to output a control signal toward closing the open degree of the low-pressure heater water level adjustable valve 26E, and when the control output is toward decreasing the water level as the result of the logic operation, an arrow 391c at an arrow direction output side is displayed by the flush to output the control signal toward opening the open degree of the low-pressure heater water level adjustable valve 26E.
In consequence, for example, it is confirmed from the event analysis support screen 309 that the control for the open degree of the low-pressure heater water level adjustable valve is performed normally in the low-pressure heater level extremely high event described in this embodiment.

For example, the template 393 indicates that the turbine extracted steam valve 24E closes and the extracted steam check valve 35E closes as the result of the logic operation to thereby display arrows 393a, 393b at the output side by the flush and output a control signal of closing the turbine extracted steam valve and extracted steam check valve.

In this way, it can be easily confirmed how the control logic is executed when the process data varies abnormally, for example, it can be easily indicated to the operator why the curve 353A in the process data, indicating the open degree of the low-pressure heater water level adjustable valve, is varied.

### (Selection of Additional Data)

Referring back to the flowchart in Fig. 9, the procedure will again be described for displaying additional data on the event analysis support screen 309.
At a step S27 subsequent from a step S26, the process checks whether the additional data button 385 is depressed. If the additional data button 385 is depressed, the process proceeds to a step S28, and if it is not depressed, the process proceeds to a step S32.
The event analysis support screen 309 is displayed by the step S26, and when the operator determines that the additional data is required for the event analysis, the additional data button 385 (as referred to Fig. 15) displayed as a "data addition" is depressed.

At the step S28, an additional data selection screen 310 is displayed to accept an additional data selection (step S29). Subsequently, the process checks whether the additional data selection is completed. If completed (Yes), the process proceeds to a step S31, and the process at a step S29 continues if the additional data selection is not completed (No).
At the step S31, the additional data is displayed additionally on the event analysis support screen 309, and the process then returns to the step S27.

Here, a method of the additional data selectable operation will be described specifically in the additional data selection screen 310 with reference to Fig. 17,
An icon button having the same function as the above-mentioned screen is appended with the same reference numeral, and an overlapping description will be omitted.
The additional data selection screen 310 is configured by a title column 310a displayed as an "additional data selection" and an operation column 310b for operating the selection. The operation column 310b provides check mark boxes 361, 362 at the left side displayed respectively as a "process data" and a "log data", apart from these, also provides a comb box 363, an additional data option display column 364, event analysis support screen display data columns 365, 367, and a determination button 335.

The check mark boxes 361, 362 positioned at the left side displayed as the "process data" and "log data" are specified that whether the additional data is the process data or log data by applying the check mark thereto. Whether the process data and log data are data to which of the system is related, in fact, the comb box 363 positioned at the left side of an item displayed as the "system" is used for specifying an attribute. The comb box 363 is configured by a choice display button 363a and an input display field 363b. The operator can supply the system name by directly using the keyboard 213 (as referred to Fig. 2) and depress the choice display button 363a to then operate the mouse 214 (as referred to Fig. 2), select a temporarily opened choice display window, and also be able to display it on the input display field 363b.

In addition, when the additional data selection screen 310 is displayed, the attribute (system name to which the data is related) of the data log or process data used in a stage (the log data in Fig. 13 or the process data in Fig. 14 is specified to select the event) where the operator selects the event of analysis target, is displayed automatically on the input display column 363b in the comb box 363, along the process from the steps S2 to S20. Here, the low-pressure heater system is first displayed automatically on the input display field 363b.

The additional data is specified by whether the check mark box 361 or 362 indicates the process data or log data. The system is specified in the comb box 363 to display an additional data option on the additional data option column 364. The operator specifies target data on the additional data option column 364 by a marker and left-clicks to be turned the data into the selectable condition. In the case of process data, a selected process data name, as a process data name 366E indicated by a broken line-framed space, is added to the event analysis support screen display data column 365. In the case of log data, a selected log data name, as a log data name 368H indicated by a broken line-framed space as an example, is added to an event analysis support screen display data column 366. Such data addition can be performed in plural times.

In fact, the process data names 366An, 366B 366C, 366D and 368A, 3688, 368C, 368D, 368E, 368F, 368G displayed by the dots in the background of the event analysis support screen display data columns 365, 366, are already displayed on the event analysis support screen 309. The background color is made different from the newly selected data name, therefore, the additional data can be discriminated from the already displayed data.
The selection of additional data is terminated, and the operator depresses the determination button 335 to thereby complete the selection of additional data at a step S30. The process again returns to the event analysis support screen 309, and the additional data is also displayed on this screen.

The process determines No at the step S27, then proceeds to a step S32 to check whether the termination button 331 is depressed in the event analysis support screen 309. If the termination button 331 is depressed, the series of control for the event analysis support in the event analysis support console unit 201b is terminated, and if the termination button 331 is not depressed, the process returns to the step S27.

The process at the steps S21, S22 in the flowchart of this embodiment corresponds to a "key information acquiring means" written in the claim. The process at the steps S23, S23 corresponds to an "analysis event selection means" written in the claim. The process at the step S25 corresponds to an "event associated data search means" written in the claim.

Here, according to the display on the event analysis support screen 309 for the low-pressure heater level extremely high event as described in this embodiment, the water level (drain water level) of the body side of low-pressure heater 9 is not lowered, but is remained increase even though the operator stops the extracted steam from the low-pressure turbine 5C in accordance with the time transition of the curve 353B as shown in Fig. 15. The condensed water flow rate on the curve 353C then increases with increase of the open degree of low-pressure heater water level adjustable valve 26E (as referred to Fig. 1), therefore, it is predicted that a part of the heating pipe configured by a number of narrow tubes in the low-pressure heater 9 is broken to thereby leak the condensed water toward the drain side, in consequence, a load (fluidity resistance) against the pressure-rising condensed water pump 8B is lowered to increase the condensed water flow rate.
Further, it is appreciated that the low-pressure heater output temperature is lowered in accordance with the time transition of curve 353D, since the operator opened the low-pressure heater bypass valve 37.

According to this embodiment mentioned above, when the trouble or abnormal event occurs and one of the operation staffs tries to figure out a cause of that event, the event analysis can easily be performed from the alarm log indicating the abnormality, auxiliary device operation log and process data log by the event analysis console 201b, even though an experience is short for a detailed knowledge of the control logic of the plant including the alarm logic and auxiliary device operation logic, a detailed knowledge for a computer software used for the monitoring display, and a consideration of cause of the event on the past trouble and abnormal operation. Particularly, since the data of the system related to the data directly indicating the abnormality and the data related to the control logic concerned with the directly indicating data are searched automatically on the basis of the previously registered event data related information 400, a cumbersome work is not required for such that the data related to the event analysis is directly searched from the data directory and displayed with the data, so that the related data can be displayed rapidly.

Further, when the operator determines that the types of data automatically displayed are not enough, the additional data is also displayed. Therefore, the data can flexibly be displayed for the event analysis.

Further, since the key time information at a time point indicating the abnormality is acquired from the log data and process data indicating the abnormality, and the process data, operation log data, alarm log data and auxiliary device operation log data, automatically searched on the basis of the above-mentioned event data related information 400, are combined to and displayed on one screen in a predetermined time range on the basis of the key time information, it is easy to check a time series variation between the pieces of data to then discuss the cause of abnormal event on the one screen.

Further, since the time axis of the trend data and log data is common in the event analysis support screen 309 to be able to check a time series correlation between the pieces of data and be able to move in synchronism with the scroll operation on the time axis and also the extension and contraction operation of the time axis, it is advantageous to check the cause of event.
The 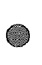 mark display for the log data of the operation history column 309c, auxiliary device history column 309d and alarm history column 309e is set to as many as ten pieces in the above-mentioned three columns so as to be seen easily, in response to the thinned priority order set by the event data related information 400 in advance, but it can also be seen all in detail by the operation buttons 381, 382, 383 displayed as the "detail", which is convenient.

### 〈〈((Modified Example〉〉))

Next, a modified example in this embodiment will be described below.
When the trend data and log data are displayed on the event analysis support screen 309, the predetermined time range (time range from a before four hours in the key time information to an after ten minutes elapse in the key time information) is fixedly displayed on the basis of the key time information in the above-mentioned embodiment, which is however not limited thereto.

For example, in the process data searched on the basis of the event data related information 400, a time point at which a variation of a predetermined amount occurs for a predetermined unit of time, for example, one minute between the key time information by the time of the four hours earlier is found, for example, a time point at which a variation equal to or greater than 10% occurs for a control target value of the time point is found, and a predetermined time range may be set for displaying from the time point by the time of the ten minutes later elapsed of the key time information.

Further, by using the data directory in this embodiment, the trend data and log data are specified by using the search menu screen in Fig. 10 to Fig. 12. The event name of analysis target is specified by using the screen in Fig. 13 and Fig. 14. The data addition is also performed on the additional data selection screen in Fig. 17. However, the specifying method of data is not limited thereto. For example, the system diagram shown in Fig. 1 may be displayed on a screen, and the cursor is hit to the respective parts of the system diagram to then left-click and display the system name, process data name and log data name. The event option may be displayed by right-clicking to then specify the event of analysis target, in a condition where the displayed system name, process data name and log data name are selected by the left-click.
The above-mentioned description has been concerned with the embodiments, however, the invention is not limited thereto and it is apparent for person skilled in the art that various changes and modifications may be made within spirit of the invention and the scope of the appended claims.

### DESCRIPTION OF THE REFERENCE NUMERALS

- 1: boiler
- 2: evaporator
- 3A: first-order superheater
- 3B: second-order superheater
- 3C: third-order superheater
- 4: reheater
- 5A: high-pressure turbine
- 5B: medium-pressure turbine
- 5C: low-pressure turbine
- 6: generator
- 7: condenser
- 8A: condensate pump
- 8B: pressure-rising condensate pump
- 9: low-pressure heater
- 10: deaerator
- 10a: deaerator flush tank
- 11: water supply pump
- 12, 13, 14: high-pressure heater
- 15A, 15B, 15C, 15D, 15E: turbine extracted steam pipe
- 16: flush tank
- 17: superheater stop valve
- 18: flush tank inlet valve
- 19: superheater vent valve
- 20: flush tank steam heat recovery valve
- 21: flush tank steam stop valve
- 22: flush tank steam pipe
- 23: water supply line
- 24A, 24B, 24C, 24D, 24E: turbine extracted steam valve
- 25A, 25B, 25C: high-pressure heater water level adjuster
- 25E: low-pressure heater water level adjuster
- 26A, 26B, 26C: high-pressure heater water level adjustable valve
- 26E: low-pressure heater water level adjustable valve
- 27A, 27B, 27C, 27E: drain pipe
- 28: flush tank steam communicating pipe
- 29A, 29B: pressure regulating valve
- 30A, 30B: pressure regulator
- 31A, 31B, 31C: vent pipe
- 32: flush tank drain valve
- 33: turbine stop valve
- 34: bypass pipe
- 35A, 35B, 35C, 35D, 35E: extracted steam check valve
- 37: low-pressure heater bypass valve
- 39: reheat steam stop valve
- 41: condensate demineralizer
- 42: condensate demineralizer outlet oxygen injection line
- 43: deaerator outlet oxygen injection line
- 45: condensed water flowmeter
- 100: thermal power plant
- 104: burner
- 105A, 105B: steam supply line
- 106: pressure gauge
- 107, 108, 109: temperature gauge
- 113: turbine adjustable valve
- 115: supplied water temperature gauge
- 116: supplied water flowmeter
- 117: fuel supply line
- 118: air supply line
- 119: fuel amount adjustable valve
- 120: fuel flowmeter
- 121: air amount adjustable valve
- 200: plant monitoring control device
- 201: operation console
- 201a: monitoring control console unit
- 201b: event analysis console unit
- 203: data processing device
- 205: LAN
- 207: control device
- 211A, 211B: console control unit
- 212A, 212B, 212C, 212D: display device
- 221A, 221B, 221C, 221D: storage device
- 223: control operation processing unit
- 224: process I/O processing unit
- 301: event analysis main menu screen
- 303: auxiliary device operation log search screen
- 305: trend data search screen
- 307: alarm log display screen
- 308: low-pressure heater level trend display screen
- 309c: operation history column
- 309d: auxiliary device operation history column
- 309e: alarm history column
- 310: additional data selection screen
- 400: event data related information
- 501: plant device

## Claims

1. A plant monitoring control device comprising:
an operation console that indicates process data, alarm log data and auxiliary device operation log data from plant devices to an operation staff to accept an operation command of the operation staff;
a control device that acquires the process data, the alarm log data, the auxiliary device operation log data and the operation command of the operation staff from the plant devices to control the plant devices; and
a data processing device that acquires the process data, the alarm log data, the auxiliary operation log data and the operation command of the operation staff to store in a storage device on a time series basis, the plant monitoring control device further comprising:
event data related information that is registered by relating pieces of specific data among the process data, the alarm log data, the auxiliary device operation log data and the operation command of the operation staff with every predetermined event in advance;
analysis event selection means that is made a specific event selectable by an operator in accordance with one piece of data selected, by the operator, from among the acquired process data, the alarm log data and auxiliary device operation log data;
key time information acquiring means that acquires key time information related to an occurrence of the specific event selected from the one piece of data selected by the operator; and
event associated data search means that searches the process data, the alarm log data, the auxiliary device operation log data and the operation command of an operation, as event associated data, related to the specific event selected in accordance with the event data related information, wherein
the event associated data in a predetermined time range among the searched event associated data of the time series basis is combined to the operation console in accordance with the acquired key time information to display afterward.

2. The device according to claim 2 wherein the event data related information contains at least the process data, the alarm log data, the auxiliary device operation log data, and respective data names and names of the event of the operation command of the operation; and the process data, the alarm log data, auxiliary device operation log data and the data name of a part of the operation command of the operation, as the event associated data, are related with every name of the event.

3. An event analysis support method in a plant monitoring control device including:
an operation console that indicates process data, alarm log data and auxiliary device operation log data from plant devices to an operation staff to accept an operation command of the operation staff;
a control device that acquires the process data, the alarm log data, the auxiliary device operation log data and the operation command of the operation staff from the plant devices to control the plant devices; and
a data processing device that acquires the process data, the alarm log data, the auxiliary operation log data and the operation command of the operation staff to store in a storage device on a time series basis, the method comprising the steps of:
relating pieces of specific data among the process data, the alarm log data, the auxiliary device operation log data and the operation command of the operation staff with every predetermined event in advance by event data related information registered in advance;
selecting a specific event in accordance with one piece of data selected, by an operator, from among the acquired process data, the alarm log data and auxiliary device operation log data by event selection means that is made the specific event selectable by the operator;
acquiring key time information related to an occurrence of the specific event selected from the one piece of data selected by the operator;
searching the process data, the alarm log data, the auxiliary device operation log data and the operation command of an operation, as event associated data, related with the specific event selected in accordance with the event data related information; and
combining the event associated data in a predetermined time range among the event associated data of the time series basis to the operation console in accordance with the acquired key time information to display afterward.
